# EUROPÄISCHE PATENTSCHRIFT

(11) **EP 4 181 355 B1**
(45) Veröffentlichungstag und Bekanntmachung des Hinweises auf die Patenterteilung: **02.04.2025**
(21) Anmeldenummer: 21208427.1
(22) Anmeldetag: 16.11.2021
(51) Int. Cl.: H02K 3/28, B60K 7/00, H02K 3/12, H02K 29/03

(54) **ANTRIEBSEINRICHTUNG FÜR EIN ELEKTRISCHES FAHRZEUG UND FAHRZEUG**
VEHICLE AND DRIVE DEVICE FOR AN ELECTRIC VEHICLE
DISPOSITIF D'ENTRAÎNEMENT POUR UN VÉHICULE ÉLECTRIQUE ET VÉHICULE

(43) Veröffentlichungstag der Anmeldung: 17.05.2023
(73) Patentinhaber: Valeo eAutomotive Germany GmbH, 91056 Erlangen (DE)
(72) Erfinder: DOTZ, Boris, 97616 Bad Neustadt a.d.Saale (DE); FRITSCH, Daniel, 97616 Bad Neustadt a.d.Saale (DE)
(74) Vertreter: Valeo Powertrain Systems

(56) Entgegenhaltungen:
- CN-A- 109 038 878
- JP-B2- 6 539 141
- US-B2- 9 735 640

## Beschreibung

Die vorliegende Erfindung betrifft eine Antriebseinrichtung für ein elektrisches Fahrzeug, aufweisend: einen Stator, der zur Erzeugung eines magnetischen Drehfelds eingerichtet ist und der aufweist: einen Statorkern, der sich entlang einer Längsachse erstreckt und in dem eine Vielzahl von in Umfangsrichtung angeordneten Nuten ausgebildet ist, und eine Statorwicklung, die mehrere Wicklungszonen in den Nuten belegt, wobei jede Wicklungszone in einer senkrecht zur Längsachse liegenden Querschnittsebene durch eine mittige radiale Teilung in eine erste Seite und in eine zweite Seite untergliedert ist; und eine Wandlungseinrichtung zur Wandlung magnetischer Energie des Drehfelds in eine Ausgabedrehbewegung der Antriebseinrichtung, wobei die Wandlungseinrichtung einen Rotor aufweist, der mit dem Stator eine rotierende elektrische Maschine ausbildet, sodass der Rotor in eine Rotordrehbewegung, die in Abhängigkeit des Drehfeld wahlweise eine von zwei entgegensetzen Drehrichtungen aufweist, versetzbar ist, und einen Übertragungsabschnitt aufweist, der zum Übertragen der Rotordrehbewegung in die Ausgabedrehbewegung eingerichtet ist.

Daneben betrifft die Erfindung ein Fahrzeug.

Die JP 5 935 587 B2 offenbart eine elektrische Maschine und ein Getriebe, die in einem Parallel-Hybrid-Fahrzeug angeordnet sind. Die elektrische Maschine weist einen Stator mit einem Statorkern und einer Statorwicklung sowie einen Rotor auf.

Die US 9 735 640 B2 offenbart eine weitere elektrische Maschine für ein Hybridfahrzeug, die einen Stator mit einem Statorkern und einer Statorwicklung aufweist, wobei die Statorwicklung mehrere Wicklungszonen in den Statornuten belegt.

Bei elektrisch angetriebenen Fahrzeugen wird eine möglichst glatte, d. h. möglichst wenig wellige, Drehmomentausgabe gewünscht, um ein gutes NVH-Verhalten (englisch: noise, vibration, harshness) zu erzielen. Dies kann insbesondere durch eine geringe Drehmomentwelligkeit und geringe parasitäre Kräfte in einer elektrischen Maschine der Antriebseinrichtung erzielt werden. Bei einer Statorwicklungen eines Stators der elektrischen Maschine soll eine erforderliche Anzahl von Wicklungen symmetrisch, mit einem geringen Wicklungsüberhang, einfach anschließbar und fertigungsfreundlich im Hinblick auf eine automatisierte Produktion mit hoher Prozesszuverlässigkeit in einem Statorkern des Stators angeordnet werden.

Der Erfindung liegt die Aufgabe zugrunde, eine Möglichkeit zum Antreiben eines Fahrzeugs mit einer geringen Drehmomentwelligkeit anzugeben.

Die erfindungsgemäße Aufgabe wird durch die Merkmale des unabhängigen Anspruchs 1 gelöst. Vorteilhafte Ausgestaltungen ergeben sich aus den abhängigen Ansprüchen, der Beschreibung und den Figuren.

Diese Aufgabe wird erfindungsgemäß bei einer Antriebseinrichtung der eingangs genannten Art dadurch gelöst, dass die Wandlungseinrichtung eine der zwei Drehrichtungen der Rotordrehbewegung als Vorzugsdrehrichtung aufweist, wobei die zweite Seite entlang der Vorzugsdrehrichtung auf die erste Seite folgt und jede Wicklungszone auf der ersten Seite eine geringere Querschnittsfläche der Nuten als auf der zweiten Seite belegt.

Die erfindungsgemäße Antriebseinrichtung weist einen Stator auf. Der Stator ist zum Erzeugen eines magnetischen Drehfelds eingerichtet. Der Stator weist einen Statorkern auf. Statorkern erstreckt sich entlang einer Längsachse. In dem Statorkern ist eine Vielzahl von Nuten ausgebildet. Die Nuten sind in Umfangsrichtung angeordnet. Der Stator weist ferner eine Statorwicklungen auf. Die Statorwicklung belegt mehrere Wicklungszonen in den Nuten. Jede Wicklungszone ist in einer Querschnittsebene durch eine mittige radiale Teilung in eine erste Seite und in eine zweite Seite untergliedert. Die Querschnittsebene liegt senkrecht zur Längsachse. Die Antriebseinrichtung weist ferner eine Wandlungseinrichtung zur Wandlung magnetischer Energie des Drehfelds in einer Ausgabedrehbewegung der Antriebseinrichtung auf. Die Wandlungseinrichtung weist einen Rotor auf. Der Rotor bildet mit dem Stator eine rotierende elektrische Maschine aus, sodass der Rotor in eine Rotordrehbewegung versetzbar ist. Die Rotordrehbewegung weist in Abhängigkeit des Drehfelds wahlweise eine von zwei entgegengesetzten Drehrichtung auf. Die Wandlungseinrichtung weist ferner einen Übertragungsabschnitt auf. Der Übertragungsabschnitt ist zum Übertragen der Rotordrehbewegung in die Ausgabedrehbewegung eingerichtet. Die Wandlungseinrichtung weist ferner eine der zwei Drehrichtungen Rotordrehbewegung als Vorzugdrehrichtung auf. Die zweite Seite folgt entlang der Vorzugsdrehrichtung auf die erste Seite. Jede Wicklungszone belegt auf der ersten Seite eine geringere Querschnittsfläche der Nuten als auf der zweiten Seite.

Die Erfindung beruht auf der Erkenntnis, dass bei einer ungleichmäßigen Belegung der Wicklungszonen, in einer Drehrichtung ein günstigeres NVH-Verhalten als entlang der anderen Drehrichtung der Rotordrehbewegung erzielt wird. Dies macht sich die Erfindung zunutze, indem sie die Belegung der Wicklungszonen entsprechend der Vorzugdrehrichtung der Antriebseinrichtung wählt. Dadurch wird eine geringe Drehmomentwelligkeit erzielt, die einen besonders ruhigen Lauf der elektrischen Maschine bei einer gleichzeitigen symmetrischen Anordnung der Statorwicklung in den Nuten ermöglicht.

Der Statorkern ist typischerweise aus einer Vielzahl geschichtet angeordneter und/oder gegeneinander isolierter Einzelbleche ausgebildet. Der Statorkern kann insoweit auch als Statorblechpaket bezeichnet werden. Die Querschnittsebene wird insbesondere durch die Radialrichtung und durch die Umfangsrichtung aufgespannt. Die radiale Teilung verläuft insbesondere auf einer Ebene, die durch die Längsachse und die Radialrichtung aufgespannt wird. Typischerweise weist der Statorkern eine Stirnseite und eine der Stirnseite gegenüberliegende weitere Stirnseite auf.

Der Rotor kann permanenterregt oder nicht permanenterregt sein. Der Rotor kann fremderregt sein. Der Rotor kann magneterregt oder spannungserregt sein. Der Übertragungsabschnitt ist insbesondere auch zur Umformung der Rotordrehbewegung in die Ausgabedrehbewegung eingerichtet. Die Drehrichtungen der Rotordrehbewegung können auch als Orientierungen der Rotordrehbewegung aufgefasst werden, sodass die Vorzugsdrehrichtung einer Vorzugsorientierung entspricht.

Jede Wicklungszone erstreckt sich bevorzugt über wenigstens zwei Nuten, besonders bevorzugt über wenigstens drei Nuten oder wenigstens vier Nuten. In jeder Wicklungszone sind typischerweise Abschnitte der Statorwicklung, die zu derselben Phase der elektrischen Maschine gehören, angeordnet.

Die Teilung kann durch die [(x+1)/2]-te Nut einer jeweiligen Wicklungszone verlaufen, wenn x ungerade ist, und mittig zwischen der (x/2)-ten und der [(x/2)+1]-ten Nuten einer jeweiligen Wicklungszone verlaufen, wenn x gerade ist, wobei x die Anzahl der von einer jeweiligen Wicklungszone belegten Nuten beschreibt.

Die Vorzugsdrehrichtung kann auf verschiedene Weise vorgegeben sein. Allgemein kann ein Vorliegen der Vorzugsdrehrichtung der Rotordrehbewegung das Fahrzeug zu einer Vorwärtsfahrt veranlassen und ein Vorliegen der anderen Drehrichtung der Rotordrehbewegung das Fahrzeug zu einer Rückwärtsfahrt veranlassen.

Es ist möglich, dass ein Wirkungsgrad des Übertragungsabschnitts bei der Vorzugsdrehrichtung höher als bei der anderen Drehrichtung ist. Mit anderen Worten kann der Übertragungsabschnitt derart eingerichtet sein, dass die Übertragung der Rotordrehbewegung in die Ausgabedrehbewegung bei Vorliegen der Vorzugsdrehrichtung effizienter als bei Vorliegen der anderen Drehrichtung der Rotordrehbewegung ist. Beispielsweise sind mechanische Verluste des Übertragungsabschnitts bei Vorliegen der Vorzugsdrehrichtung geringer als bei Vorliegen der anderen Drehrichtung.

Es kann auch vorgesehen sein, dass der Übertragungsabschnitt ein Getriebe mit einer die Vorzugsdrehrichtung bestimmenden asymmetrischen Ausgestaltung aufweist. So kann beispielsweise ein jeweiliger Zahn von miteinander kämmenden Zahnrädern des Getriebes asymmetrisch ausgebildet sein.

Die Antriebseinrichtung kann ferner eine Steuerungseinrichtung für den Übertragungsabschnitt aufweisen, die für die Vorzugsdrehrichtung eine höhere Anzahl von wählbaren Betriebsmodi aufweist als für die andere der Drehrichtungen. So kann eine höhere Anzahl von Betriebsmodi für die Vorwärtsfahrt vorgesehen sein als für die Rückwärtsfahrt.

Es ist auch möglich, dass die Antriebseinrichtung eine Belüftungseinrichtung aufweist, die bei der Vorzugsdrehrichtung eine höhere Kühleffizienz als bei der anderen der Drehrichtungen aufweist. Die höhere Kühleffizienz kann sich beispielsweise aus der Position eines Lufteinlasses ergeben, der beim Vorliegen der Vorzugsdrehrichtung Fahrtwind erhält.

Bei der erfindungsgemäßen Antriebseinrichtung kann die Statorwicklung als Runddrahtwicklung ausgebildet sein.

Alternativ kann die Statorwicklung als Formleiterwicklung, insbesondere als Haarnadelwicklung, ausgebildet sein. Bei einer Formleiterwicklung ist die Statorwicklung insbesondere durch eine Vielzahl von Formleitern ausgebildet, die einen Strompfad oder mehrere Strompfade für einen die Statorwicklung zur Erzeugung des Drehfelds durchfließenden Strom ausbilden. Die Formleiter können aus einem Metallstab ausgebildet sein und/oder einen rechteckigen oder abgerundet rechteckigen Querschnitt aufweisen. Vorzugsweise weist jeder oder ein Teil der Formleiter zwei gerade Abschnitte auf, die sich innerhalb einer jeweiligen Nut in axialer Richtung erstrecken. Die geraden Abschnitte können an der ersten Stirnseite des Statorkerns durch einen Kopfabschnitt miteinander verbunden sein. Auf der weiteren Stirnseite des Statorkerns kann sich an jeden geraden Abschnitt ein Endabschnitt anschließen. Der geraden Abschnitte sind vorzugsweise einstückig mit dem Kopfabschnitt und/oder mit den Endabschnitten ausgebildet. Vorzugsweise sind die Endabschnitte von jeweils zwei Formleitern stoffschlüssig, insbesondere durch Schweißen, elektrisch leitfähig und mechanisch miteinander verbunden, um die Statorwicklung auszubilden. Außerdem kann ein Teil der Formleiter, insbesondere zum Anschließen der Statorwicklung an einen Phasenanschluss und/oder an einen oder mehrere Sternpunkte vorgesehene Formleiter, einen geraden Abschnitt, einen Anschlussabschnitt auf der ersten Stirnseite und einen Endabschnitt auf der weiteren Stirnseite aufweisen.

Bei der erfindungsgemäßen Antriebseinrichtung weist die Statorwicklung eine Anzahl N Stränge und eine Anzahl 2·P Pole auf und beträgt die Anzahl der Nuten 2·P·N·q, wobei q ≥ 2 ist, und sich jede Wicklungszone über zumindest q+1 der Nuten erstreckt, wobei P, N und q natürliche Zahlen sind. q kann auch als Lochzahl bzw. Anzahl von Nuten je Pol und Phase bezeichnet werden. Vorzugsweise ist jede Wicklungszone radial in erste bis L-te Lagen untergliedert ist, die nach ihrer Reihenfolge in Radialrichtung benannt sind, wobei die Lagen erste bis (L/2)-te Doppellagen ausbilden, wobei die i-te Doppellage die (2i-1)-te und die (2i)-te Lage für alle 1 ≤ i ≤ (L/2) umfasst, wobei L ≥ 6 und gerade ist, wobei L und i natürliche Zahlen sind. Die Anzahl der Lagen kann 6, 8, 10, 12, 14 oder 16 betragen. Bei einer Ausgestaltung der Statorwicklung als Haarnadelwicklung kann in jeder Lage ein gerader Abschnitt eines der Formleiter angeordnet sein.

Bevorzugt ist eine Anzahl der Doppellagen, die geringer als die Anzahl der übrigen Doppellagen ist, entgegen der Vorzugsdrehrichtung gegenüber den übrigen Doppellagen entgegen der Vorzugsdrehrichtung um wenigstens eine Nut verschoben. Eine solche Anordnung der Doppellagen kann auch als ungleichmäßige Sehnung (englisch pitch) der Statorwicklung bezeichnet werden. Dadurch kann erreicht werden, dass jede Wicklungszone auf der ersten Seite die geringere Querschnittsfläche als auf der zweiten Seite belegt. Es kann insbesondere eine radial äußere Doppellage, eine radial innere Doppellage oder eine radial mittlere Doppellage verschoben sein.

Außerdem kann vorgesehen sein, dass jede Wicklungszone in Umfangsrichtung in erste bis q-te Teilwicklungszonen untergliedert ist, die jeweils alle Lagen umfassen und entsprechend ihrer Reihenfolge in Umfangsrichtung benannt sind, wobei die Statorwicklung für einen jeweiligen Strang eine Phasenwicklung aufweist, wobei die Phasenwicklung wenigstens eine einen Strompfad ausbildende Teilwicklung umfasst, die innerhalb der Nuten angeordnete Innenabschnitte und an Stirnseiten des Statorkerns angeordnete Verbindungsabschnitte, welche jeweils zwei bezüglich des Strompfads unmittelbar aufeinanderfolgende Innenabschnitte elektrisch leitfähig verbinden, umfasst. Die Innenabschnitte können durch die geraden Abschnitte der Formleiter ausgebildet sein. Die Verbindungsabschnitte können an der ersten Stirnseite durch die Kopfabschnitte der Formleiter ausgebildet sein. Die Verbindungsabschnitte können an der weiteren Stirnseite durch die verbundenen Endabschnitte zweier unterschiedlicher Formleiter ausgebildet sein.

Die Statorwicklung kann einen Sternpunkt aufweisen. Die wenigstens eine Teilwicklung eines jeweiligen Strangs kann zu dem Sternpunkt zusammengeschaltet sein. Die Statorwicklung kann auch zwei Sternpunkte und mehrere Teilwicklungen je Strang aufweisen. Dann können jeweils eine der Teilwicklungen eines jeweiligen Strangs zu einem der Sternpunkte und eine andere der Teilwicklungen eines jeweiligen Strangs zu dem anderen der Sternpunkte zusammengeschaltet sein.

Gemäß einer ersten Ausgestaltungsvariante kann die Teilwicklung mehrere Leiterfolgen von bezüglich des Strompfads aufeinanderfolgenden Innenabschnitten umfassen, wobei jede Leiterfolge in einer der Doppellagen angeordnet ist und einen vollen Umlauf um den Statorkern ausbildet. Auf diese Weise kann eine Wellenwicklung als Statorwicklung ausgebildet werden.

Es ist auch bevorzugt, dass erste bis L/2-te der Leiterfolgen jeweils entlang einer Umfangsrichtung, insbesondere entlang der Vorzugsdrehrichtung, verlaufen, wobei [(L/2)+1]-te bis L-te der Leiterfolgen jeweils entlang einer weiteren Umfangsrichtung, die der Umfangsrichtung entgegengesetzt ist, verlaufen. Dadurch kann die Wellenwicklung gegensinnig gewickelt werden.

In Weiterbildung kann vorgesehen sein, dass jede Leiterfolge, die einer anderen Leiterfolge bezüglich des Strompfads unmittelbar nachfolgt, in einer anderen Teilwicklungszone als die andere Leiterfolge angeordnet ist.

Bei der ersten Ausgestaltungsvariante wird es ferner bevorzugt, wenn eine weitere Teilwicklung, die der Teilwicklung entspricht, vorgesehen ist, wobei ein jeweiliger Innenabschnitt der weiteren Teilwicklung, der in derselben Lage derselben Wicklungszone wie ein Innenabschnitt der Teilwicklung liegt, in einer anderen Teilwicklungszone als diejenige Teilwicklungszone, in welcher der Innenabschnitt der Teilwicklung liegt, angeordnet ist. Die Teilwicklung kann insoweit auch als erste Teilwicklung und die weitere Teilwicklung als zweite Teilwicklung bezeichnet werden.

Im Folgenden werden eine zweite und eine dritte Ausgestaltungsvariante beschrieben.

Um bei der zweiten und der dritten Ausgestaltungsvariante eine kombinierte Schleifen-Wellen-Wicklung zu bilden, kann vorgesehen sein, dass eine der wenigstens einen Teilwicklung einen Satz von ersten bis P-ten Leiterfolgen erster Art umfasst, die in der Reihenfolge ihrer Benennung bezüglich des Strompfads aufeinander folgen und jeweils in ersten bis vierten unmittelbar benachbarten Wicklungszonen für denselben Strang angeordnet sind. Vorzugsweise umfasst jede Leiterfolge erster Art erste bis (L/2)-te Paare von einem ersten der Innenabschnitte und einem zweiten der Innenabschnitte, wobei die Paare entsprechend ihrer Reihenfolge entlang des Strompfads benannt sind. Die ersten und zweiten Innenabschnitte können in unterschiedlichen Lagen derselben Doppellage angeordnet sein. Dabei ist es bevorzugt, dass das erste Paar in der ersten Doppellage angeordnet ist, wobei das zweite Paar in der (L/2)-ten Doppellage angeordnet ist, wobei das dritte Paar in der zweiten Doppellage angeordnet ist oder die dritten bis (L/2)-ten Paare in der zweiten bis [(L/2)-1]-ten Doppellage angeordnet sind. Die dritte Wicklungszone, in welcher die Innenabschnitte der ersten bis (P-1)-ten Leiterfolgen angeordnet ist, kann die erste Wicklungszone, in welcher die der Leiterfolge bezüglich des Strompfads nachfolgende Leiterfolge angeordnet ist, sein. Die vierte Wicklungszone, in welcher die Innenabschnitte der ersten bis (P-1)-ten Leiterfolgen angeordnet ist, kann die zweite Wicklungszone, in welcher die der Leiterfolge bezüglich des Strompfads nachfolgende Leiterfolge angeordnet ist, sein. Diese Teilwicklung kann auch als erste Teilwicklung bezeichnet werden.

Alternativ oder zusätzlich kann bei der zweiten und der dritten Ausgestaltungsvariante vorgesehen sein, dass eine der wenigstens einen Teilwicklung einen Satz von ersten bis P-ten Leiterfolgen zweiter Art umfasst, die in der Reihenfolge ihrer Benennung bezüglich des Strompfads aufeinander folgen und jeweils in zwei unmittelbar benachbarten Wicklungszonen für denselben Strang angeordnet sind. Bevorzugt ist vorgesehen, dass jede Leiterfolge zweiter Art erste bis (L/2)-te Paare von einem ersten der Innenabschnitte, und einem zweiten der Innenabschnitte umfasst und die Paare entsprechend ihrer Reihenfolge entlang des Strompfads benannt sind. Dabei können die ersten und zweiten Innenabschnitte in unterschiedlichen Lagen der der Benennung des Paars entsprechenden Doppellage angeordnet sein. Vorzugsweise ist vorgesehen, dass die ersten bis (P-1)-ten Leiterfolgen zweiter Art durch einen der Verbindungsabschnitte mit der entlang des Strompfads nachfolgenden Leiterfolge zweiter Art verbunden sind und die nachfolgende Leiterfolge zweiter Art in zwei unmittelbar benachbarten Wicklungszonen für denselben Strang angeordnet ist. Diese Teilwicklung kann auch als zweite Teilwicklung bezeichnet werden.

Vorzugsweise verlaufen die Teilwicklungen in entgegengesetzten Umfangsrichtungen um den Statorkern.

Bei der zweiten Ausgestaltungsvariante kann vorgesehen sein, dass der erste Innenabschnitt der Paare der Leiterfolgen der oder einer jeweiligen Teilwicklung in einer der Lagen der Doppellage und der zweite Innenabschnitt der Paare der Leiterfolgen der oder einer jeweiligen Teilwicklung in der andere der Lagen der Doppellage angeordnet sind.

Bei der dritten Ausgestaltungsvariante können der erste Innenabschnitt der ungeradzahlig benannten Paare der Leiterfolgen der oder einer jeweiligen Teilwicklung in einer der Lagen der Doppellage, der zweite Innenabschnitt der ungeradzahlig benannten Paare der Leiterfolgen der oder einer jeweiligen Teilwicklung in der anderen Lage der Doppellage, der erste Innenabschnitt der geradzahlig benannten Paare der Leiterfolgen der oder einer jeweiligen Teilwicklung in der anderen Lage der Doppellage und der zweite Innenabschnitt der geradzahlig benannten Paare der Leiterfolgen der oder einer jeweiligen Teilwicklung in der einen Lage der Doppellage angeordnet sein.

In bevorzugter Ausgestaltung kann ferner vorgesehen sein, dass die oder eine jeweilige Teilwicklung insgesamt q Sätze der Leiterfolgen umfasst, die jeweils in derselben Teilwicklungszone angeordnet sind, wobei jeder Satz, der einem anderen Satz derselben Teilwicklung bezüglich des Strompfads unmittelbar nachfolgt, in einer anderen Teilwicklungszone als der andere Satz angeordnet ist.

Die der Erfindung zugrundeliegende Aufgabe wird ferner gelöst durch ein Fahrzeug, umfassend eine erfindungsgemäße Antriebseinrichtung, die dazu eingerichtet ist das Fahrzeug anzutreiben.

Die Vorzugsdrehrichtung kann auch eine Einbaulage der Antriebseinrichtung in einer Fahrzeugkarosserie vorgegeben sein. Vorzugsweise liegt die Ausgabedrehbewegung an einer Achse und/oder an Rädern des Fahrzeugs an.

Weitere Vorteile und Einzelheiten der vorliegenden Erfindung ergeben sich aus den im Folgenden beschriebenen Ausführungsbeispielen sowie anhand der Zeichnungen. Diese sind schematische Darstellungen und zeigen:
- Fig. 1: eine Prinzipskizze eines Ausführungsbeispiels des erfindungsgemäßen Fahrzeugs mit einem ersten Ausführungsbeispiel der erfindungsgemäßen Antriebseinrichtung;
- Fig. 2: eine perspektivische Ansicht des Stators der Antriebseinrichtung gemäß dem ersten Ausführungsbeispiel;
- Fig. 3: eine Prinzipskizze der im Statorkern angeordneten Statorwicklung gemäß dem ersten Ausführungsbeispiel;
- Fig. 4: eine Prinzipskizze einer Wicklungszone in den Nuten gemäß dem ersten Ausführungsbeispiel;
- Fig. 5: ein Blockschaltbild der Statorwicklung gemäß dem ersten Ausführungsbeispiel;
- Fig. 6: ein Wicklungsschema einer Phase der Statorwicklung gemäß dem ersten Ausführungsbeispiel;
- Fig. 7: ein Blockschaltbild der Statorwicklung gemäß einem zweiten Ausführungsbeispiel der erfindungsgemäßen Antriebseinrichtung;
- Fig. 8: ein Wicklungsschema einer Phase der Statorwicklung gemäß dem zweiten Ausführungsbeispiel;
- Fig. 9: ein Blockschaltbild der Statorwicklung gemäß einem dritten Ausführungsbeispiel der erfindungsgemäßen Antriebseinrichtung; und
- Fig. 10: ein Wicklungsschema einer Phase der Statorwicklung gemäß dem dritten Ausführungsbeispiel.

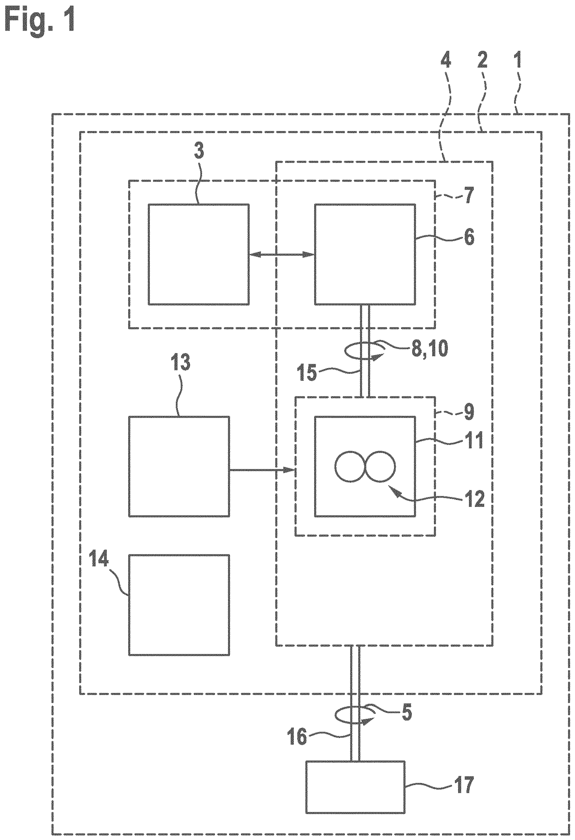

Fig. 1 ist eine Prinzipskizze eines Ausführungsbeispiels eines Fahrzeugs 1 mit einem ersten Ausführungsbeispiel einer Antriebseinrichtung 2.

Die Antriebseinrichtung 2 weist einen Stator 3, der zur Erzeugung eines magnetischen Drehfelds eingerichtet ist, auf. Daneben weist die Antriebseinrichtung 2 eine Wandlungseinrichtung 4 zur Wandlung magnetischer Energie des Drehfelds in eine Ausgabedrehbewegung 5 der Antriebseinrichtung 2 auf.

Die Wandlungseinrichtung 4 weist einen Rotor 6 auf, der mit dem Stator 3 eine rotierende elektrische Maschine 7 ausbildet, sodass der Rotor 6 in eine Rotordrehbewegung 8 versetzbar ist. Daneben weist die Wandlungseinrichtung 4 einen Übertragungsabschnitt 9 auf, der zum Übertragen und Umwandeln der Rotordrehbewegung 8 in die Ausgabedrehbewegung 5 eingerichtet ist.

Der Übertragungsabschnitt 9 weist eine von zwei Drehrichtungen der Rotordrehbewegung 8 als Vorzugsdrehrichtung 10 auf. Diese ergibt sich insbesondere dadurch, dass ein Wirkungsgrad des Übertragungsabschnitts 9 bei der Vorzugsdrehrichtung 10 höher als bei der anderen der Drehrichtungen ist. Dementsprechend ist der Übertragungsabschnitt 9 beispielsweise derart eingerichtet, dass die Übertragung der Rotordrehbewegung 8 in die Ausgabedrehbewegung 5 bei Vorliegen der Vorzugsdrehrichtung 10 effizienter als bei Vorliegen der anderen Drehrichtung der Rotordrehbewegung 8 ist.

Die Vorzugsdrehrichtung 10 kann sich auch daraus ergeben, dass der Übertragungsabschnitt 7 ein Getriebe 11 mit einer die Vorzugsdrehrichtung 9 bestimmenden asymmetrischen Ausgestaltung aufweist. Dazu kann beispielsweise ein jeweiliger Zahn von miteinander kämmenden Zahnrädern 12 der Getriebes 11 asymmetrisch ausgebildet sein. Ebenso kann sich die Vorzugsdrehrichtung 9 daraus ergeben, dass die Antriebseinrichtung 2 eine Steuerungseinrichtung 13 für den Übertragungsabschnitt 9 aufweist, die für die Vorzugsdrehrichtung 10 eine höhere Anzahl von wählbaren Betriebsmodi aufweist als für die andere der Drehrichtungen. So kann eine höhere Anzahl von Betriebsmodi für eine Vorwärtsfahrt des Fahrzeugs 1 vorgesehen sein als für dessen Rückwärtsfahrt. Ferner kann sich die Vorzugsdrehrichtung 9 daraus ergeben, dass die Antriebseinrichtung 2 eine Belüftungseinrichtung 14 aufweist, die bei der Vorzugsdrehrichtung 10 eine höhere Kühleffizienz als bei der anderen der Drehrichtungen aufweist. Daneben kann sich die Vorzugsdrehrichtung 10 durch eine Einbaulauge der Antriebseinrichtung 2 im Fahrzeugs 1 ergeben.

Wie Fig. 1 ferner zeigt, liegt die Rotordrehbewegung 8 über eine Welle 15 der Antriebseinrichtung 2 am Übertragungsabschnitt 9 an. Die Ausgabedrehbewegung 5 liegt über eine Achse 16 des Fahrzeugs 1 an dessen Rädern 17 an.

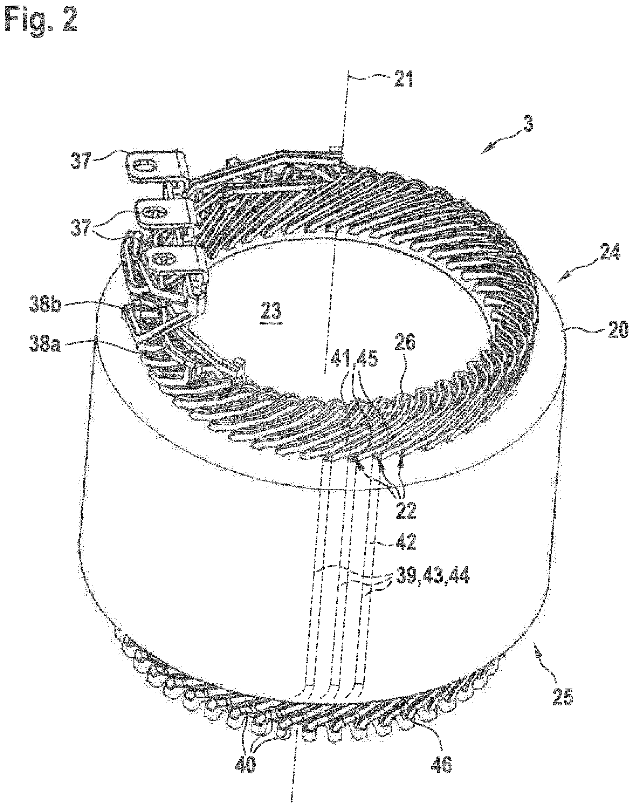

Fig. 2 ist eine perspektivische Ansicht des Stators 3 der Antriebseinrichtung 2 gemäß dem ersten Ausführungsbeispiel.

Der Stator 3 weist einen Statorkern 20, der sich entlang einer Längsachse 21 erstreckt und in dem eine Vielzahl von in Umfangsrichtung angeordneten Nuten 22 ausgebildet ist. Der Statorkern 20 umgibt hier exemplarisch einen Aufnahmeraum 23 für den Rotor 6 (siehe Fig. 1) und weist eine erste Stirnseite 24 und eine dieser gegenüberliegende zweite Stirnseite 25 auf. Außerdem weist der Stator 3 eine Statorwicklung 26 auf.

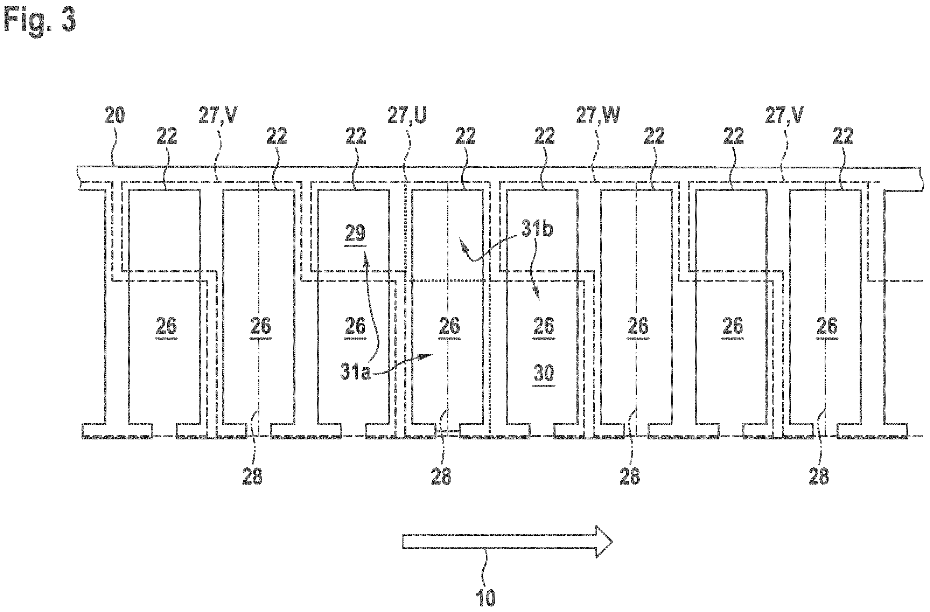

Fig. 3 ist eine Prinzipskizze der im Statorkern 20 angeordneten Statorwicklung 26.

Die Statorwicklung belegt mehrere Wicklungszonen 27 in den Nuten 22. Jede Wicklungszone ist dabei in einer senkrecht zur Längsachse 21 (siehe Fig. 2) liegenden Querschnittseben, die in Fig. 3 der Zeichenebene entspricht, durch eine mittige radiale Teilung 28 in eine erste Seite 29 und in eine zweite Seite 30 untergliedert. Im vorliegenden Ausführungsbeispiel erstreckt sich jede Wicklungszone 27 exemplarisch über drei Nuten 22, sodass der die Teilung 28 mittig durch die die zweite der drei Nuten 22 der Wicklungszone 27 verläuft.

Die zweite Seite 30 folgt entlang der Vorzugsdrehrichtung 10 auf die erste Seite 29. Ersichtlich belegt die jede Wicklungszone 27 auf der ersten Seite 29 eine geringe Querschnittsfläche der Nuten 22 als auf der zweiten Seite 30.

In Fig. 3 ist ferner zu erkennen, dass die Statorwicklung 26 N = 3 Stränge U, V, W für eine jeweilige Phase der elektrischen Maschine 7 (siehe Fig. 1) aufweist. Jede Wicklungszone 27 enthält nur Anteile der Statorwicklung 26 desselben Strangs U, V, W. Eine Lochzahl q der Statorwicklung 26 beträgt im vorliegenden Ausführungsbeispiel zwei. Jede Wicklungszone 27 erstreckt sich vorliegend über eine Anzahl von Nuten 22, die q+1 beträgt. Zudem ist jede Wicklungszone 27 in erste bis q-te Teilwicklungszonen 31a, 31b, nämlich in eine erste Teilwicklungszone 31a und in eine zweite Teilwicklungszone 31b untergliedert.

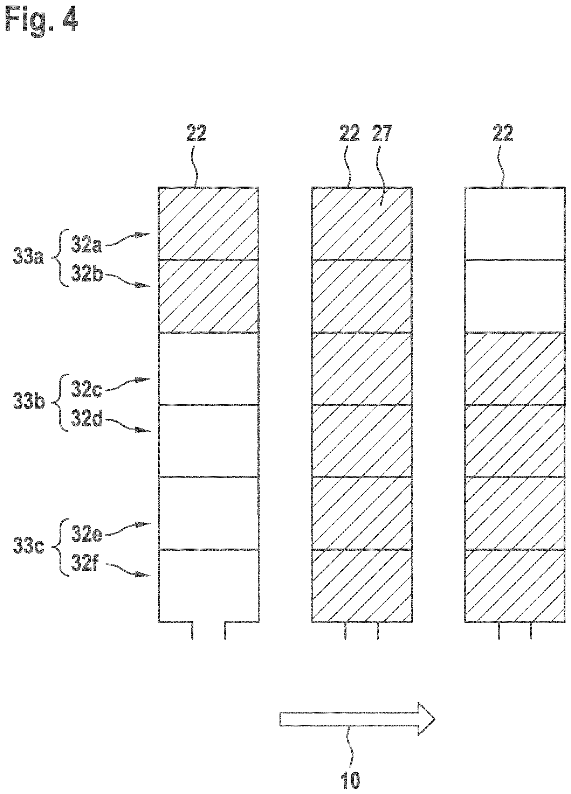

Fig. 4 ist eine Prinzipskizze einer Wicklungszone 27 in den Nuten 22.

Jede Wicklungszone 27, die in Fig. 3 durch eine Schraffur gekennzeichnet ist, ist radial in erste bis sechste (L-te) Lagen 32a-f untergliedert, die nach ihrer Reihenfolge in Radialrichtung von radial außen nach radial innen benannt sind. Die Lagen 32a-f bilden erste bis dritte [(L/2)-te] Doppellagen 33a-d, wobei die i-te Doppellage die (2i-1)-te und die (2i)-te Lage für alle 1 ≤ i ≤ (L/2) umfasst. Demnach umfassen die erste Doppellage 33a die erste Lage 32a und die zweite Lage 32b, die zweite Doppellage 33b die dritte Lage 32c und die vierte Lage 32d und die dritte Doppellage 33c die fünfte Lage 32e und die sechste Lage 32f. Eine Doppellage 33a, vorliegend die radial äußerste Doppellage 33a, ist entgegen Vorzugsdrehrichtung 10 gegenüber den übrigen Doppellagen 33b, 33c entgegen der Vorzugsdrehrichtung um eine Nut 22 verschoben.

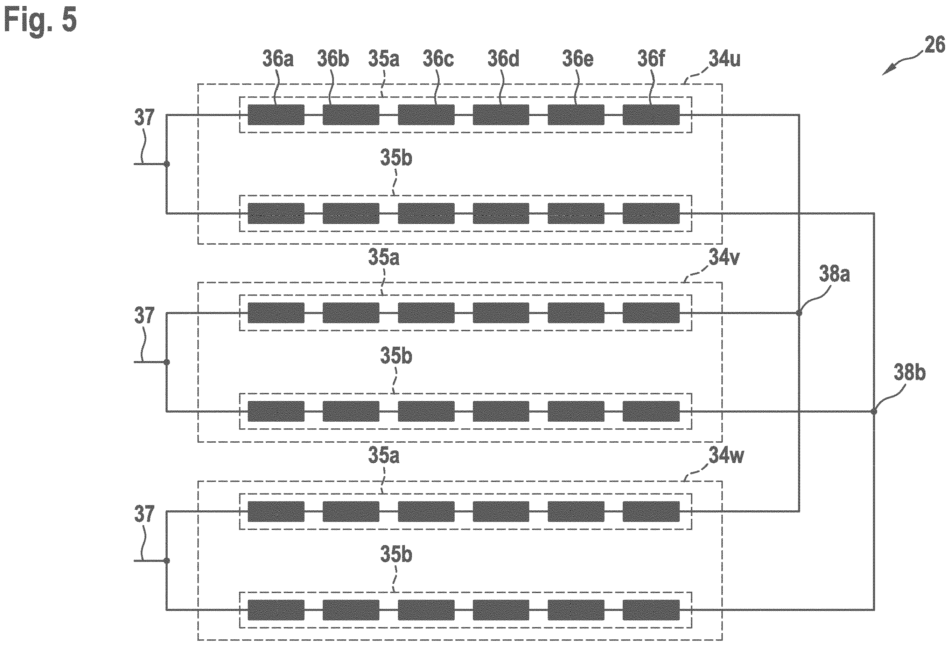

Fig. 5 ist ein Blockschaltbild der Statorwicklung 26 gemäß dem ersten Ausführungsbeispiel.

Die Statorwicklung 23 weist für jeden Strang U, V, W eine Phasenwicklung 34u, 34v, 34w auf. Jede Phasenwicklung 34u, 34v, 34w umfasst eine erste Teilwicklung 35a und eine zweite Teilwicklung 35b, die jeweils einen Strompfad ausbilden. Jede Teilwicklung 35a, 35b umfasst eine der Anzahl der Schichten L entsprechende Anzahl von Leiterfolgen 36a-f, die in Reihe geschaltet sind.

Jede Phasenwicklung 34u, 34v, 34w ist an einen Phasenanschluss 37 angeschlossen. Die Phasenwicklungen 34u, 34v, 34w sind ferner zu zwei Sternpunkten 38a, 38b zusammengeschaltet, wobei die ersten Teilwicklungen 35a zum ersten Sternpunkt 38a und die zweiten Teilwicklungen 35b zum zweiten Sternpunkt 38b zusammengeschaltet sind. Die Phasenanschlüsse 37 und die Sternpunkte 38a, 38b sind auch in Fig. 2 dargestellt.

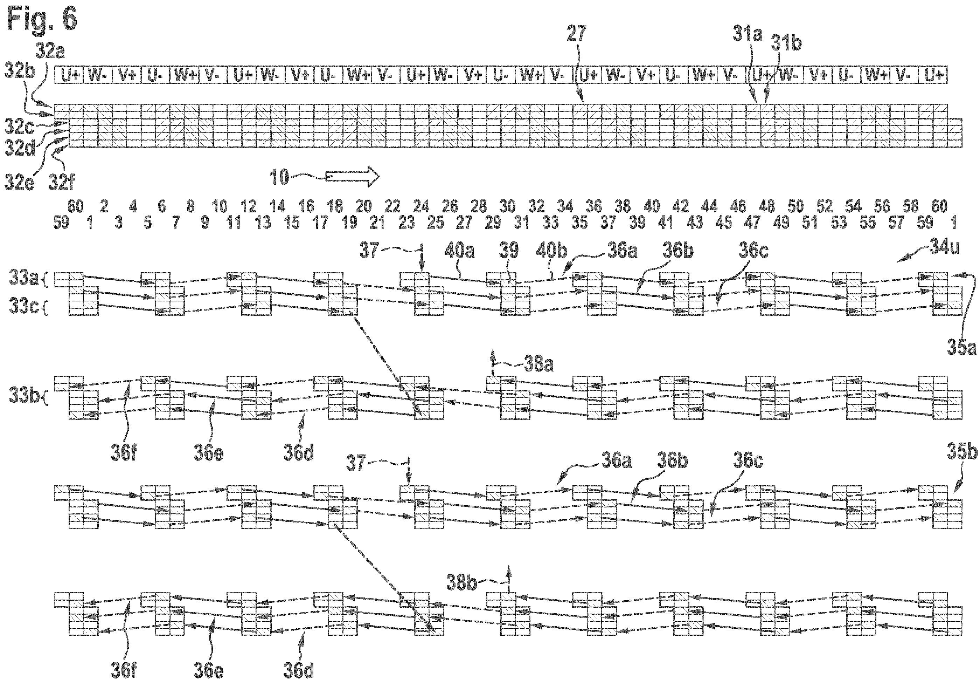

Fig. 6 ist ein Wicklungsschema einer Phase U der Statorwicklung 26 gemäß dem ersten Ausführungsbeispiel.

Die Statorwicklung 26 weist 2·P = 10 Pole, N = 3 Phasen und eine Lochzahl q = 2 auf. Die Anzahl der Nuten 22 beträgt 2·P·N·q = 60. Eine Nutnummerierung von 1 bis 60 ist in Fig. 6 angegeben. Jede Teilwicklung 35a, 35b umfasst die innerhalb der Nuten 22 angeordnete Innenabschnitte 39 und an den Stirnseiten 24, 25 des Statorkerns 20 angeordnete Verbindungsabschnitte 40, 41 (vgl. Fig. 2), welche jeweils zwei bezüglich des Strompfads unmittelbar aufeinanderfolgende Innenabschnitte 39 elektrisch leitfähig verbinden. Dabei befinden sich die Verbindungsabschnitte 40 an der zweiten Stirnseite 25 und die Verbindungsabschnitte 41 an der ersten Stirnseite 24. In Fig. 6 sind die Verbindungsabschnitte 40 durch durchgezogene Linien und die Verbindungsabschnitte 41 durch gestrichelte Linien dargestellt.

Die Statorwicklung 26 ist als Wellenwicklung ausgebildet. Die Leiterfolgen 36a-f sind jeweils durch mehrere aufeinanderfolgende und durch Verbindungsabschnitte 40, 41 in Reihe geschaltete Innenabschnitte 39 ausgebildet. Beim ersten Ausführungsbeispiel bildet jede Leiterfolge 36a-f einen vollen Umlauf um den Statorkern 20 in Umfangsrichtung aus. Dabei verlaufen die ersten bis dritten (L/2-ten) Leiterfolgen 36a-c jeweils entlang der Vorzugsdrehrichtung 10 und die vierten bis sechsten Leiterfolgen 36c-f jeweils entgegengesetzt zu den ersten bis dritten Leiterfolgen 36a-c, also gegen die Vorzugsdrehrichtung 10. Jede Leiterfolge 36a-f ist in einer der Doppellagen 33a-c angeordnet. Jede Leiterfolge 36b-f, die einer anderen Leiterfolge 36a-e bezüglich des Strompfads unmittelbar nachfolgt, ist in einer anderen Teilwicklungszone 31a, 31b als die andere Leiterfolge 36a-e angeordnet. Die Leiterfolgen 36a-f sind dadurch abwechselnd in unterschiedlichen Teilwicklungszonen 31a, 31b angeordnet.

Die zweite Teilwicklung 35b entspricht insoweit ersten Teilwicklung 35a. Bei der zweiten Teilwicklung 35b ist ein jeweiliger Innenabschnitt 39, der in derselben Lage 32a-f derselben Wicklungszone 27 wie ein Innenabschnitt 39 der ersten Teilwicklung 35a liegt, in einer anderen Teilwicklungszone 31a, 31b als diejenige Teilwicklungszone 31a, 31b, in welcher der Innenabschnitt 39 der ersten Teilwicklung 35a liegt, angeordnet.

Bei beiden Teilwicklungen 35a, 35b sind die unmittelbar durch einen Verbindungsabschnitt 40, 41 verbundene Innenabschnitte 39, die derselben Leiterfolge 36a-f angehören, sind um q·N = 6 Nuten voneinander entfernt.

Bei der ersten Teilwicklung 35a sind der Innenabschnitt 39 der ersten Leiterfolge 36a und der mit ihm unmittelbar durch einen Verbindungsabschnitt 41 verbundene Innenabschnitt 39 der zweiten Leiterfolge 36b um q·N = 6 Nuten voneinander entfernt. Der Innenabschnitt 39 der zweiten Leiterfolge 36b und der mit ihm unmittelbar durch einen Verbindungsabschnitt 41 verbundene Innenabschnitt 39 der dritten Leiterfolge 36c sind um q·N+1 = 7 Nuten voneinander entfernt. Der Innenabschnitt 39 der dritten Leiterfolge 36c und der mit ihm unmittelbar durch einen Verbindungsabschnitt 41 verbundene Innenabschnitt 39 der vierten Leiterfolge 36d sind um q·N-1 = 5 Nuten voneinander entfernt. Der Innenabschnitt 39 der vierten Leiterfolge 36d und der mit ihm unmittelbar durch einen Verbindungsabschnitt 41 verbundene Innenabschnitt 39 der fünften Leiterfolge 36e sind um q·N-1 = 5 Nuten voneinander entfernt. Der Innenabschnitt 39 der fünften Leiterfolge 36e und der mit ihm unmittelbar durch einen Verbindungsabschnitt 41 verbundene Innenabschnitt 39 der sechsten Leiterfolge 36f sind um q·N+2 = 8 Nuten voneinander entfernt.

Bei der zweiten Teilwicklung 35b sind der Innenabschnitt 39 der ersten Leiterfolge 36a und der mit ihm unmittelbar durch einen Verbindungsabschnitt 41 verbundene Innenabschnitt 39 der zweiten Leiterfolge 36b um q·N+2 = 8 Nuten voneinander entfernt. Der Innenabschnitt 39 der zweiten Leiterfolge 36b und der mit ihm unmittelbar durch einen Verbindungsabschnitt 41 verbundene Innenabschnitt 39 der dritten Leiterfolge 36c sind um q·N-1 = 5 Nuten voneinander entfernt. Der Innenabschnitt 39 der dritten Leiterfolge 36c und der mit ihm unmittelbar durch einen Verbindungsabschnitt 41 verbundene Innenabschnitt 39 der vierten Leiterfolge 36d sind um q·N+1 = 7 Nuten voneinander entfernt. Der Innenabschnitt 39 der vierten Leiterfolge 36d und der mit ihm unmittelbar durch einen Verbindungsabschnitt 41 verbundene Innenabschnitt 39 der fünften Leiterfolge 36e sind um q·N+1 = 7 Nuten voneinander entfernt. Der Innenabschnitt 39 der fünften Leiterfolge 36e und der mit ihm unmittelbar durch einen Verbindungsabschnitt 41 verbundene Innenabschnitt 39 der sechsten Leiterfolge 36f sind um q·N = 6 Nuten voneinander entfernt.

Wie Fig. 6 ferner zu entnehmen ist, sind die ersten Leiterfolgen 36a der Teilwicklungen 35a, 35b an den Phasenanschluss 37 angeschlossen. Die sechsten Leiterfolgen 36f der Teilwicklungen 35a, 35b sind an die Sternpunkte 38a, 38b angeschlossen, wobei hier die sechste Leiterfolge 36f der ersten Teilwicklung 35a an den ersten Sternpunkt 38a angeschlossen ist und die sechste Leiterfolge 36f der zweiten Teilwicklung 35b an den zweiten Sternpunkt 38b angeschlossen ist.

Die Phasenwicklungen 34v, 34w der Stränge V, W entsprechen der zuvor beschriebenen Phasenwicklung 34u des Strangs U und sind um q·N = 6 Nuten in Umfangsrichtung zum Strang U verschoben angeordnet.

Mit Bezug zu Fig. 2 ist die Statorwicklung 26 ist als Haarnadelwicklung durch eine Vielzahl von Formleitern 42 ausgebildet. Die Formleiter 42 sind aus einem Metallstab ausgebildet und weisen einen rechteckigen oder abgerundet rechteckigen Querschnitt auf. Ein Teil der Formleiter 42 weist zwei gerade Abschnitte 43, 44 auf, die sich innerhalb einer jeweiligen Nut 22 in axialer Richtung erstrecken und die Innenabschnitte 39 ausbilden. Die geraden Abschnitte 43, 44 sind an einer ersten Stirnseite 24 des Statorkerns 20 durch einen Kopfabschnitt 45 miteinander verbunden, der den Verbindungsabschnitt 40b ausbildet. Der Kopfabschnitt 45 ist einstückig mit den geraden Abschnitten 43, 44 ausgebildet. Auf einer zweiten Stirnseite 25 des Statorkerns 20 schließt sich an jeden geraden Abschnitt 43, 44 ein Endabschnitt 46 an. Die Endabschnitte 46 von jeweils zwei Formleitern 42 sind stoffschlüssig, insbesondere durch Schweißen, elektrisch leitfähig und mechanisch miteinander verbunden. Zwei miteinander verbundene Endabschnitte 46 bilden einen Verbindungsabschnitt 40a an der zweiten Stirnseite 25 aus. Die nicht im Detail dargestellten Formleiter, die mit einem der Phasenanschlüsse 37 bzw. einem der Sternpunkte 38a, 38b verbunden sind, weisen lediglich einen geraden Abschnitt und einen Endabschnitt, der mit dem Endabschnitt 46 eines zwei gerade Abschnitte 43, 44 aufweisenden Formleiters einen Verbindungsabschnitt 40a auf der zweiten Stirnseite 25 ausbildet.

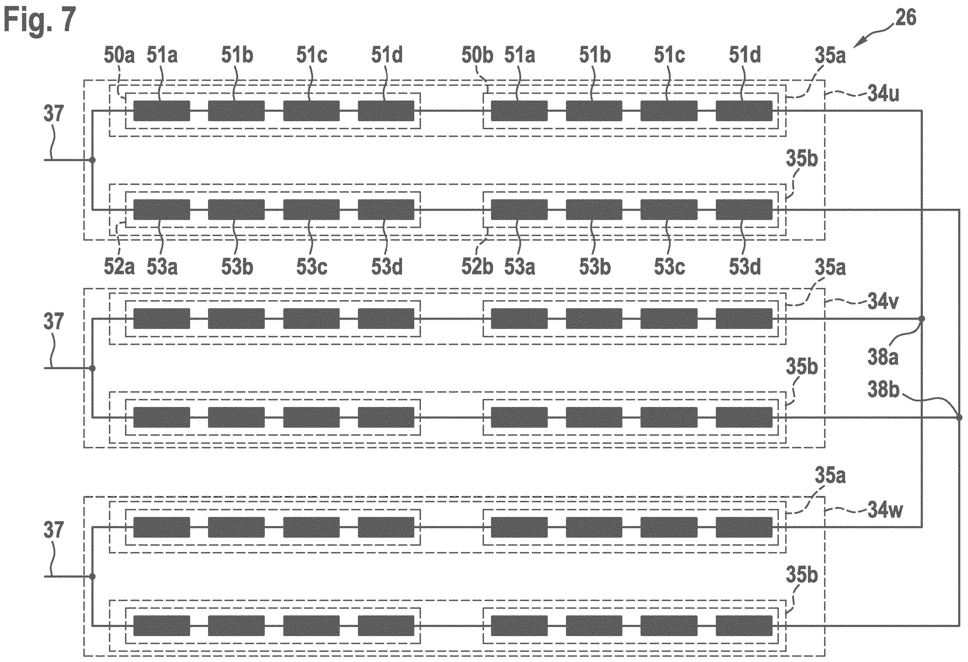

Fig. 7 ist ein Blockschaltbild der Statorwicklung 26 gemäß einem zweiten Ausführungsbeispiel der Antriebseinrichtung 2. Bis auf die im Folgenden beschriebenen Abweichungen lassen sich alle Ausführungen zum ersten Ausführungsbeispiel auf das zweite Ausführungsbeispiel übertragen. Gleiche oder gleichwirkende Komponenten sind mit identischen Bezugszeichen versehen.

Beim zweiten Ausführungsbeispiel ist die Statorwicklung 26 ein kombinierte Wellen-Schleifen-Wicklung. Die Statorwicklung 26 umfasst die erste Teilwicklung 35a einer jeweiligen Phasenwicklung 34u, 34v, 34w einen ersten Satz 50a von ersten bis vierten (P-ten) Leiterfolgen erster Art 51a-d, die in der Reihenfolge ihrer Benennung bezüglich des Strompfads aufeinander folgen. Daneben umfasst die erste Teilwicklung 35a einen zweiten Satz 50b von ersten bis vierten (P-ten) Leiterfolgen erster Art 51a-d.

Die zweite Teilwicklung 35b einer jeweiligen Phasenwicklung 34u, 34v, 34w umfasst einen ersten Satz 52a von ersten bis vierten (P-ten) Leiterfolgen zweiter Art 53a-d, die in der Reihenfolge ihrer Benennung bezüglich des Strompfads aufeinander folgen. Daneben umfasst die zweite Teilwicklung 35b einen zweiten Satz 52b von ersten bis vierten (P-ten) Leiterfolgen zweiter Art 53a-d.

Die Anzahl der Sätze 50a, 50b, 52a, 52b einer jeweiligen Teilwicklung 35a, 35b entspricht dabei der Lochzahl q.

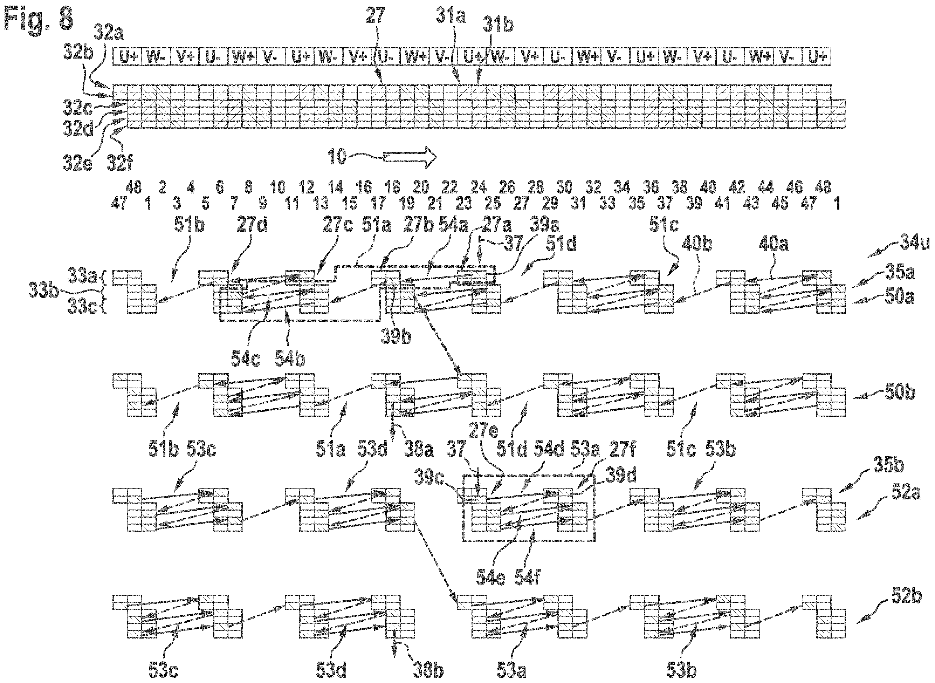

Fig. 8 ist ein Wicklungsschema einer Phase U der Statorwicklung 26 gemäß dem zweiten Ausführungsbeispiel.

Die Statorwicklung 26 gemäß dem zweiten Ausführungsbeispiel weist 2·P = 8 Pole und dementsprechend 48 Nuten 22 auf.

Jede Leiterfolge erster Art 51-d ist in ersten bis vierten unmittelbar benachbarten Wicklungszonen 27a-d für denselben Strang U angeordnet und umfasst erste bis dritte [(L/2)-te] Paare 54a-c von einem ersten Innenabschnitt 39a und einem zweiten Innenabschnitt 39b. Die Paare 54a-c sind entsprechend ihrer Reihenfolge entlang des Strompfads benannt.

Die ersten Innenabschnitte 39a und die zweiten Innenabschnitte 39b sind in unterschiedlichen Lagen 32a-f derselben Doppellage 33a-c angeordnet. Das erste Paar 54a ist in der ersten Doppellage 33a angeordnet, das zweite Paar 54b ist in der dritten [(L/2)-ten] Doppellage 33c und das dritte Paar 54c ist in der zweiten Doppellage 33b angeordnet. Allgemein gesprochen sind die dritten bis (L/2)-ten Paare in der zweiten bis [(L/2)-1]-ten Doppellage angeordnet.

Die dritte Wicklungszone 27c, in welcher die Innenabschnitte 39a, 39b der ersten bis dritten Leiterfolgen erster Art 51a-c [(P-1)-ten] angeordnet sind, ist die erste Wicklungszone 27a, in welche die der Leiterfolge erster Art 51a-c bezüglich des Strompfads nachfolgende Leiterfolge 51b-d angeordnet ist. Entsprechend ist die vierte Wicklungszone 27d, welcher die Innenabschnitte 39a, 39b der ersten bis dritten [(P-1)-ten] Leiterfolgen erster Art 51a-c angeordnet sind, die zweite Wicklungszone 27b, in welcher die der Leiterfolge erster Art 51a-c bezüglich des Strompfads nachfolgende Leiterfolge erster Art 51b-d angeordnet ist.

Jede Leiterfolge zweiter Art 53a-d ist in zwei unmittelbar benachbarten Wicklungszonen 27e, 27f für denselben Strang U angeordnet und umfasst erste bis dritte [(L/2)-te] Paare 54d-f von einem ersten Innenabschnitt 39c und einem zweiten Innenabschnitte 39d. Die Paare 54d-f sind entsprechend ihrer Reihenfolge entlang des Strompfads benannt.

Die ersten und zweiten Innenabschnitte 39c, 39d sind in unterschiedlichen Lagen 32a-f der der Benennung des Paars 54d-f entsprechenden Doppellage 33a-c angeordnet. Die ersten bis dritten [(P-1)-ten] Leiterfolgen zweiter Art 53a-c sind durch einen der Verbindungsabschnitte 40b mit der entlang des Strompfads nachfolgenden Leiterfolge zweiter Art 53b-d verbunden. Die nachfolgende Leiterfolge zweiter Art 53b-d ist in zwei unmittelbar benachbarten Wicklungszonen 27 für denselben Strang U angeordnet.

Die ersten und zweiten Teilwicklungen 35a, 35b verlaufen in entgegengesetzten Umfangsrichtungen um den Statorkern 20, wobei die zweite Teilwicklung 35b entlang der Vorzugsdrehrichtung 10 verläuft.

Beim zweiten Ausführungsbeispiel sind der erste Innenabschnitt 39a, 39c der Paare 54a-f in einer der Lagen 32a-f der Doppellage 33a-c und der zweite Innenabschnitt 39b, 39d der Paare 54a-f in der anderen Lage 32a-f der Doppellage angeordnet.

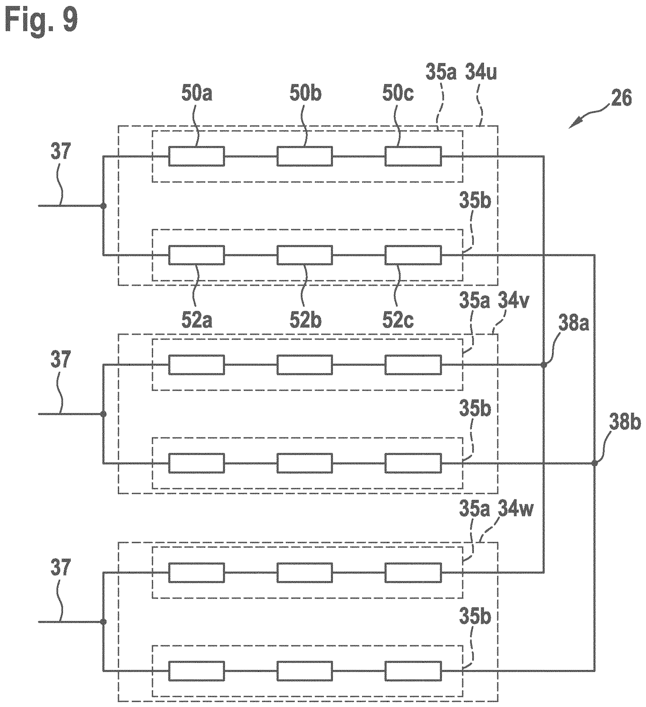

Fig. 9 ist ein Blockschaltbild der Statorwicklung 26 gemäß einem dritten Ausführungsbeispiel der Antriebseinrichtung 2. Bis auf die im Folgenden beschriebenen Abweichungen lassen sich alle Ausführungen zum zweiten Ausführungsbeispiel auf das dritte Ausführungsbeispiel übertragen. Gleiche oder gleichwirkende Komponenten sind mit identischen Bezugszeichen versehen.

Beim dritten Ausführungsbeispiel weisen die erste Teilwicklung 35a zusätzlich einen dritten Satz 50c Leiterfolgen erster Art 51a-d und die zweite Teilwicklung 35b zusätzlich einen dritten Satz 52c Leiterfolgen zweiter Art 53a-d, wobei die Leiterfolgen 51a-d, 53a-d aus Gründen der Übersichtlichkeit in Fig. 9 nicht dargestellt sind.

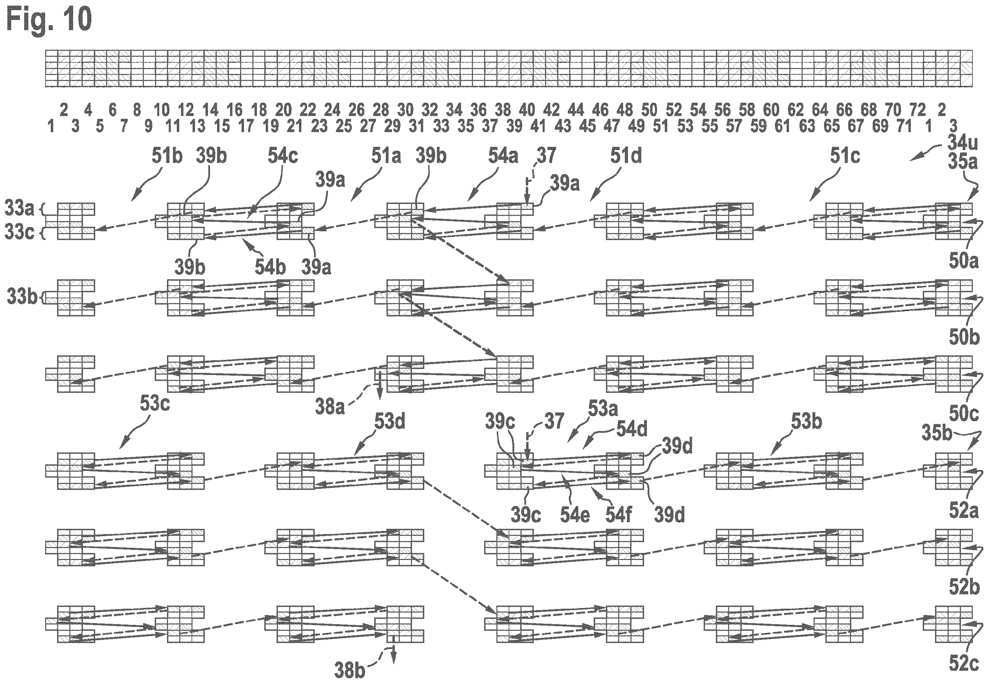

Fig. 10 ist ein Wicklungsschema einer Phase U der Statorwicklung 26 gemäß dem dritten Ausführungsbeispiel.

Die Statorwicklung 26 gemäß dem dritten Ausführungsbeispiel weist - wie das zweite Ausführungsbeispiel - 2·P = 8 Pole, jedoch eine Lochzahl q = 3 auf. Die Anzahl der Nutten 22 beträgt dementsprechend 72. Aus der Erhöhung der Lochzahl q ergibt sich, dass jeder die dritten Sätze 50c, 52c vorgesehen sind.

Beim dritten Ausführungsbeispiel ist der erste Innenabschnitt 39a, 39c der ungeradzahlig benannten Paare 54a, 54c, 54d, 54f der Leiterfolgen 51a-d, 53a-d einer jeweiligen Teilwicklung 35a, 35b in einer der Lagen 32a-f der Doppellage 33a-c und der zweite Innenabschnitt 39b, 39d der ungeradzahlig benannten Paare 54a, 54c, 54d, 54f der Leiterfolgen 51a-d, 53a-d einer jeweiligen Teilwicklung 35a, 35b in der anderen Lage der Doppellage 33a-c angeordnet. Der erste Innenabschnitt 39a, 39c der geradzahlig benannten Paare 54b, 54e der Leiterfolgen 51a-d, 53a-d einer jeweiligen Teilwicklung 35a, 35b ist der anderen Lage 39b, 39d der Doppellage 33a-c angeordnet und der zweite Innenabschnitt 39b, 39d der geradzahlig benannten Paare 54, 54e der Leiterfolgen 51a-d, 53a-d einer jeweiligen Teilwicklung 35a, 35b ist in der einen Lage 32a-f der Doppellage 33a-c angeordnet.

Beim dritten Ausführungsbeispiel ist zudem die zweite Doppellage 33b gegenüber der ersten Doppellage 33a und der dritten Doppellage 33c entgegen der Vorzugsdrehrichtung 10 verschoben.

Gemäß weiteren Ausführungsbeispielen, die jeweils einem der zuvor beschriebenen Ausführungsbeispiele entsprechen, ist die Statorwicklung 26 nicht als Haarnadelwicklung, sondern als Runddrahtwicklung ausgebildet.

Gemäß weiteren Ausführungsbeispielen, die jeweils einem der zuvor beschriebenen Ausführungsbeispiele entsprechen, ist die Anzahl der Pole größer oder kleiner, wobei sich die Anzahl der Leiterfolgen entsprechend vergrößert oder reduziert.

Gemäß weiteren Ausführungsbeispielen, die jeweils einem der zuvor beschriebenen Ausführungsbeispiele entsprechen, weist die Statorwicklung 26 lediglich einen Sternpunkt für alle Teilwicklungen 35a, 35b auf.

## Patentansprüche

1. Antriebseinrichtung (2) für ein elektrisches Fahrzeug (1), aufweisend:
- einen Stator (3), der zur Erzeugung eines magnetischen Drehfelds eingerichtet ist und der aufweist:
- einen Statorkern (20), der sich entlang einer Längsachse (21) erstreckt und in dem eine Vielzahl von in Umfangsrichtung angeordneten Nuten (22) ausgebildet ist, und
- eine Statorwicklung (26), die mehrere Wicklungszonen (27) in den Nuten (22) belegt, wobei jede Wicklungszone (27) in einer senkrecht zur Längsachse (21) liegenden Querschnittsebene durch eine mittige radiale Teilung (28) in eine erste Seite (29) und in eine zweite Seite (30) untergliedert ist; , wobei
- die Statorwicklung (26) eine Anzahl N Stränge (U, V, W) und eine Anzahl 2·P Pole aufweist und die Anzahl der Nuten (22) 2·P·N·q beträgt, wobei q ≥ 2, und sich jede Wicklungszone (27) über zumindest q+1 der Nuten (22) erstreckt, wobei P, N und q natürliche Zahlen sind, wobei
- jede Wicklungszone (27) radial in erste bis L-te Lagen (32a-f) untergliedert ist, die nach ihrer Reihenfolge in Radialrichtung benannt sind, wobei die Lagen (32a-f) erste bis (L/2)-te Doppellagen (33a-c) ausbilden, wobei die i-te Doppellage (33a-c) die (2i-1)-te und die (2i)-te Lage (32a-f) für alle 1 ≤ i ≤ (L/2) umfasst, wobei L ≥ 6 und gerade ist, wobei L und i natürliche Zahlen sind und
- eine Wandlungseinrichtung (4) zur Wandlung magnetischer Energie des Drehfelds in eine Ausgabedrehbewegung (5) der Antriebseinrichtung (2), wobei die Wandlungseinrichtung (4)
- einen Rotor (6) aufweist, der mit dem Stator (3) eine rotierende elektrische Maschine (7) ausbildet, sodass der Rotor (6) in eine Rotordrehbewegung (8), die in Abhängigkeit des Drehfelds wahlweise eine von zwei entgegensetzen Drehrichtungen aufweist, versetzbar ist, und
- einen Übertragungsabschnitt (9) aufweist, der zum Übertragen der Rotordrehbewegung (8) in die Ausgabedrehbewegung (5) eingerichtet ist,
**dadurch gekennzeichnet, dass**
die Wandlungseinrichtung (4) eine der zwei Drehrichtungen der Rotordrehbewegung (8) als Vorzugsdrehrichtung (10) aufweist, wobei die zweite Seite (30) entlang der Vorzugsdrehrichtung (10) auf die erste Seite (29) folgt und jede Wicklungszone (27) auf der ersten Seite (29) eine geringe Querschnittsfläche der Nuten (22) als auf der zweiten Seite (30) belegt.

2. Antriebseinrichtung nach Anspruch 1, wobei
- ein Wirkungsgrad des Übertragungsabschnitts (9) bei der Vorzugsdrehrichtung (10) höher als bei der anderen der Drehrichtungen ist und/oder
- der Übertragungsabschnitt (9) ein Getriebe (11) mit einer die Vorzugsdrehrichtung (10) bestimmenden asymmetrischen Ausgestaltung aufweist und/oder
- die Antriebseinrichtung (2) eine Steuerungseinrichtung (13) für den Übertragungsabschnitt (9) aufweist, die für die Vorzugsdrehrichtung (10) eine höhere Anzahl von wählbaren Betriebsmodi aufweist als für die andere der Drehrichtungen und/oder
- die Antriebseinrichtung (2) eine Belüftungseinrichtung (14) aufweist, die bei der Vorzugsdrehrichtung (10) eine höhere Kühleffizienz als bei der anderen der Drehrichtungen aufweist.

3. Antriebseinrichtung nach Anspruch 1 oder 2, wobei
die Statorwicklung (26) als Runddrahtwicklung oder als Formleiterwicklung ausgebildet ist.

4. Antriebseinrichtung nach einem der vorhergehenden Ansprüche, wobei
eine Anzahl der Doppellagen (33a-c), die geringer als die Anzahl der übrigen Doppellagen (33a-c) ist, entgegen der Vorzugsdrehrichtung (10) gegenüber den übrigen Doppellagen (33a-c) um wenigstens eine Nut (22) verschoben ist.

5. Antriebseinrichtung nach einem der vorhergehenden Ansprüche , wobei
- jede Wicklungszone (27) in Umfangsrichtung in erste bis q-te Teilwicklungszonen (31a, 31b) untergliedert ist, die jeweils alle Lagen (32a-f) umfassen und entsprechend ihrer Reihenfolge in Umfangsrichtung benannt sind, wobei
- die Statorwicklung (26) für einen jeweiligen Strang (U, V, W) eine Phasenwicklung (34u, 34v, 34w) aufweist, wobei
- die Phasenwicklung (34u, 34v, 34w) wenigstens eine einen Strompfad ausbildende Teilwicklung (35a, 35b) umfasst, die innerhalb der Nuten (22) angeordnete Innenabschnitte (39, 39a-d) und an Stirnseiten (24, 25) des Statorkerns (20) angeordnete Verbindungsabschnitte (40, 41), welche jeweils zwei bezüglich des Strompfads unmittelbar aufeinanderfolgende Innenabschnitte (39, 39a-d) elektrisch leitfähig verbinden, umfasst.

6. Antriebseinrichtung nach Anspruch 5, wobei
- die Teilwicklung (35a) mehrere Leiterfolgen (36a-f) von bezüglich des Strompfads aufeinanderfolgenden Innenabschnitten (39) umfasst, wobei
- jede Leiterfolge (36-af) in einer der Doppellagen (33a-c) angeordnet ist und einen vollen Umlauf um den Statorkern (20) ausbildet, wobei
- erste bis L/2-te der Leiterfolgen (36a-c) jeweils entlang einer Umfangsrichtung, insbesondere entlang der Vorzugsdrehrichtung (10), verlaufen, wobei
- [(L/2)+1]-te bis L-te der Leiterfolgen (36d-f) jeweils entlang einer weiteren Umfangsrichtung, die der Umfangsrichtung entgegengesetzt ist, verlaufen.

7. Antriebseinrichtung nach Anspruch 6, wobei
jede Leiterfolge (36b-f), die einer anderen Leiterfolge (36a-e) bezüglich des Strompfads unmittelbar nachfolgt, in einer anderen Teilwicklungszone (31a, 31b) als die andere Leiterfolge (36a-e) angeordnet ist.

8. Antriebseinrichtung nach Anspruch 6 oder 7, wobei
- eine weitere Teilwicklung (35b), die der Teilwicklung (35a) entspricht, vorgesehen ist, wobei
- ein jeweiliger Innenabschnitt (39) der weiteren Teilwicklung (35b), der in derselben Lage (32a-f) derselben Wicklungszone (27) wie ein Innenabschnitt (39) der Teilwicklung (35a) liegt, in einer anderen Teilwicklungszone (31a, 31b) als diejenige Teilwicklungszone (31a, 31b), in welcher der Innenabschnitt (39) der Teilwicklung (35a) liegt, angeordnet ist.

9. Antriebseinrichtung nach Anspruch 5, wobei
- eine der wenigstens einen Teilwicklung (35a) einen Satz (50a, 50b) von ersten bis P-ten Leiterfolgen erster Art (51a-d) umfasst, die in der Reihenfolge ihrer Benennung bezüglich des Strompfads aufeinander folgen und jeweils in ersten bis vierten unmittelbar benachbarten Wicklungszonen (27a-d) für denselben Strang (U, V, W) angeordnet sind, wobei
- jede Leiterfolge erster Art (51a-d) erste bis (L/2)-te Paare (54a-c) von einem ersten der Innenabschnitte (39a), und einem zweiten der Innenabschnitte (39b) umfasst und die Paare (54a-c) entsprechend ihrer Reihenfolge entlang des Strompfads benannt sind, wobei
- wobei die ersten und zweiten Innenabschnitte (39a, 39b) in unterschiedlichen Lagen (32a-f) derselben Doppellage (33a-c) angeordnet sind, wobei
- das erste Paar (54a) in der ersten Doppellage (33a) angeordnet ist, wobei
- das zweite Paar (54b) in der (L/2)-ten Doppellage (33c) angeordnet ist, wobei
- das dritte Paar (54c) in der zweiten Doppellage (33b) angeordnet ist oder die dritten bis (L/2)-ten Paare (54c) in der zweiten bis [(L/2)-1]-ten Doppellage (33b) angeordnet sind, wobei
- die dritte Wicklungszone (27c), in welcher die Innenabschnitte der ersten bis (P-1)-ten Leiterfolgen (51a-c) angeordnet sind, die erste Wicklungszone (27a), in welcher die der Leiterfolge (51a-c) bezüglich des Strompfads nachfolgende Leiterfolge (51b-d) angeordnet ist, ist, wobei
- die vierte Wicklungszone (27d), in welcher die Innenabschnitte (39) der ersten bis (P-1)-ten Leiterfolgen (51a-c) angeordnet sind, die zweite Wicklungszone (27b), in welcher die der Leiterfolge (51a-c) bezüglich des Strompfads nachfolgende Leiterfolge (51b-d) angeordnet ist, ist.

10. Antriebseinrichtung nach Anspruch 5 oder Anspruch 9, wobei
- eine der wenigstens einen Teilwicklung (35b) einen Satz (52a, 52b) von ersten bis P-ten Leiterfolgen zweiter Art (53a-d) umfasst, die in der Reihenfolge ihrer Benennung bezüglich des Strompfads aufeinander folgen und jeweils in zwei unmittelbar benachbarten Wicklungszonen (27e, 27f) für denselben Strang (U, V, W) angeordnet sind, wobei
- jede Leiterfolge zweiter Art (53a-d) erste bis (L/2)-te Paare (54d-f) von einem ersten der Innenabschnitte (39c), und einem zweiten der Innenabschnitte (39d) umfasst und die Paare (54d-f) entsprechend ihrer Reihenfolge entlang des Strompfads benannt sind, wobei
- die ersten und zweiten Innenabschnitte (39c, 39d) in unterschiedlichen Lagen (32a-f) der der Benennung des Paars entsprechenden Doppellage (33a-c) angeordnet sind, wobei
- die ersten bis (P-1)-ten Leiterfolgen zweiter Art (53a-c) durch einen der Verbindungsabschnitte (41) mit der entlang des Strompfads nachfolgenden Leiterfolge zweiter Art (53b-d) verbunden sind und die nachfolgende Leiterfolge zweiter Art (53b-d) in zwei unmittelbar benachbarten Wicklungszonen (27) für denselben Strang (U, V, W) angeordnet ist.

11. Antriebseinrichtung nach den Ansprüchen 9 und 10, wobei die Teilwicklungen (35a, 35b) in entgegengesetzten Umfangsrichtungen um den Statorkern (20) verlaufen.

12. Antriebseinrichtung nach einem der Ansprüche 9 bis 11, wobei
- der erste Innenabschnitt (39a, 39c) der Paare (54a-f) der Leiterfolgen (51a-d, 53a-d) der oder einer jeweiligen Teilwicklung (35a, 35b) in einer der Lagen (32a-f) der Doppellage (33a-c) und der zweite Innenabschnitt (39b, 39d) der Paare (54a-f) der Leiterfolgen (51a-d, 53a-d) der oder einer jeweiligen Teilwicklung (35a, 35b) in der andere der Lagen (33a-c) der Doppellage (33a-c) angeordnet sind oder
- der erste Innenabschnitt (39a, 39c) der ungeradzahlig benannten Paare (54a, 54c, 54d, 54f) der Leiterfolgen (51a-d, 53a-d) der oder einer jeweiligen Teilwicklung (35a, 35b) in einer der Lagen (32a-f) der Doppellage (33a-c), der zweite Innenabschnitt (39b, 39d) der ungeradzahlig benannten Paare (54a, 54c, 54d, 54f) der Leiterfolgen (51a-d, 53a-d) der oder einer jeweiligen Teilwicklung (35a, 35b) in der anderen Lage (32a-f) der Doppellage (33a-c), der erste Innenabschnitt (39a, 39c) der geradzahlig benannten Paare (54b, 54e) der Leiterfolgen (51a-d, 53a-d) der oder einer jeweiligen Teilwicklung (35a, 35b) in der anderen Lage (32a-f) der Doppellage (33a-c) und der zweite Innenabschnitt (39b, 39d) der geradzahlig benannten Paare (54b, 54e) der Leiterfolgen (51a-d, 53a-d) der oder einer jeweiligen Teilwicklung (35a, 35b) in der einen Lage (32a-f) der Doppellage (33a-c) angeordnet sind.

13. Antriebseinrichtung nach einem der Ansprüche 9 bis 12, wobei
- die oder eine jeweilige Teilwicklung insgesamt q Sätze (50a-c, 52a-c) der Leiterfolgen (51a-d, 53a-d) umfasst, die jeweils in derselben Teilwicklungszone (31a, 31b) angeordnet sind, wobei
- jeder Satz (50b, 50c, 52b, 52c), der einem anderen Satz (50a, 50b, 52a, 52b) derselben Teilwicklung (35a, 35b) bezüglich des Strompfads unmittelbar nachfolgt, in einer anderen Teilwicklungszone (31a, 31b) als der andere Satz (50a, 50b, 52a, 52b) angeordnet ist.

14. Fahrzeug (1), umfassend eine Antriebseinrichtung (2) nach einem der vorhergehenden Ansprüche, die dazu eingerichtet ist, das Fahrzeug (1) anzutreiben.

## Claims

1. Drive device (2) for an electric vehicle (1), having:
- a stator (3) which is configured to generate a rotating magnetic field and has:
- a stator core (20) which extends along a longitudinal axis (21) and in which a multiplicity of slots (22) arranged in the circumferential direction are configured, and
- a stator winding (26) which occupies a plurality of winding zones (27) in the slots (22), wherein, in a cross-sectional plane that is perpendicular with respect to the longitudinal axis (21), each winding zone (27) is subdivided by way of a centric radial division (28) into a first side (29) and into a second side (30); wherein
- the stator winding (26) has a number N of phases (U, V, W) and a number 2·P of poles, and the number of slots (22) is 2·P·N·q, where q ≥ 2, and each winding zone (27) extends across at least q+1 of the slots (22), wherein P, N and q are natural numbers, wherein
- each winding zone (27) is radially subdivided into first to L-th layers (32a-f) which are designated according to their sequence in the radial direction, wherein the layers (32a-f) configure first to (L/2)th double layers (33a-c), wherein the i-th double layer (33a-c) comprises the (2i-1)th and the (2i)th layer (32a-f) for all 1 ≤ i ≤ (L/2), wherein L ≥ 6 and is even, wherein L and i are natural numbers, and
- a converter device (4) for converting magnetic energy of the rotating field into a rotating output movement (5) of the drive device (2), wherein the converter device (4) has
- a rotor (6) which, with the stator (3), configures a rotating electric machine (7) such that the rotor (6) is able to be set in a rotating rotor movement (8) which, as a function of the rotating field, selectively has one of two opposite rotation directions, and
- a transmission portion (9) which is configured for transmitting the rotating rotor movement (8) to the rotating output movement (5),
**characterized in that**
the converter device (4) has one of the two rotation directions of the rotating rotor movement (8) as the preferred rotation direction (10), wherein the second side (30) follows the first side (29) along the preferred rotation direction (10), and each winding zone (27) occupies a smaller cross-sectional area of the slots (22) on the first side (29) than on the second side (30).

2. Drive device according to Claim 1, wherein
- an efficiency of the transmission portion (9) is higher in the preferred rotation direction (10) than in the other one of the rotation directions, and/or
- the transmission portion (9) has a gearbox (11) having an asymmetrical design embodiment that defines the preferred rotation direction (10), and/or
- the drive device (2) has a control device (13) for the transmission portion (9), which has a larger number of selectable operating modes for the preferred rotation direction (10) than for the other one of the rotation directions, and/or
- the drive device (2) has a ventilation device (14) which has a higher cooling efficiency in the preferred rotation direction (10) than in the other one of the rotation directions.

3. Drive device according to Claim 1 or 2, wherein the stator winding (26) is configured as a round-wire winding or as a shaped-conductor winding.

4. Drive device according to one of the preceding claims, wherein
a number of the double layers (33a-c), being lower than the number of the other double layers (33a-c), are displaced in relation to the other double layers (33a-c) counter to the preferred rotation direction (10) by at least one slot (22).

5. Drive device according to one of the preceding claims, wherein
- each winding zone (27) is subdivided in the circumferential direction into first to q-th sub-winding zones (31a, 31b) which comprise in each case all layers (32a-f) and are designated according to their sequence in the circumferential direction, wherein
- the stator winding (26) has a phase winding (34u, 34v, 34w) for a respective phase (U, V, W), wherein
- the phase winding (34u, 34v, 34w) comprises at least one sub-winding (35a, 35b) which configures a current path and comprises internal portions (39, 39a-d) that are arranged within the slots (22) and connection portions (40, 41) that are arranged on end sides (24, 25) of the stator core (20) and in each case connect, in an electrically conductive manner, two internal portions (39, 39a-d) which are directly successive with regard to the current path.

6. Drive device according to Claim 5, wherein
- the sub-winding (35a) comprises a plurality of conductor sequences (36a-f) of internal portions (39) that are successive with regard to the current path, wherein
- each conductor sequence (36-af) is arranged in one of the double layers (33a-c) and configures a full encirclement of the stator core (20), wherein
- the first to L/2-th of the conductor sequences (36a-c) run in each case along a circumferential direction, in particular along the preferred rotation direction (10), wherein
- the [(L/2)+1]-th to L-th of the conductor sequences (36d-f) run in each case along a further circumferential direction which is counter to the circumferential direction.

7. Drive device according to Claim 6, wherein
each conductor sequence (36b-f) that directly follows another conductor sequence (36a-e) with regard to the current path is arranged in a different sub-winding zone (31a, 31b) than the other conductor sequence (36a-e).

8. Drive device according to Claim 6 or 7, wherein
- a further sub-winding (35b), which corresponds to the sub-winding (35a), is provided, wherein
- a respective internal portion (39) of the further sub-winding (35b), which lies in the same layer (32a-f) of the same winding zone (27) as an internal portion (39) of the sub-winding (35a), is arranged in a different sub-winding zone (31a, 31b) than that sub-winding zone (31a, 31b), in which the internal portion (39) of the sub-winding (35a) lies.

9. Drive device according to Claim 5, wherein
- one of the at least one sub-winding (35a) comprises a set (50a, 50b) of first to P-th conductor sequences of the first type (51a-d) that follow one another in the sequence of their designation with regard to the current path and are in each case arranged in first to fourth directly adjacent winding zones (27a-d) for the same phase (U, V, W), wherein
- each conductor sequence of the first type (51a-d) comprises first to (L/2)-th pairs (54a-c) of a first one of the internal portions (39a) and a second one of the internal portions (39b), and the pairs (54a-c) are designated according to their sequence along the current path, wherein
- the first and second internal portions (39a, 39b) are arranged in different layers (32a-f) of the same double layer (33a-c), wherein
- the first pair (54a) is arranged in the first double layer (33a), wherein
- the second pair (54b) is arranged in the (L/2)-th double layer (33c), wherein
- the third pair (54c) is arranged in the second double layer (33b), or the third to (L/2)-th pairs (54c) are arranged in the second to [(L/2)-1]-th double layer (33b), wherein
- the third winding zone (27c), in which the internal portions of the first to (P-1)-th conductor sequences (51a-c) are arranged, is the first winding zone (27a), in which the conductor sequence (51b-d) that follows the conductor sequence (51a-c) with regard to the current path is arranged, wherein
- the fourth winding zone (27d), in which the internal portions (39) of the first to (P-1)-th conductor sequences (51a-c) are arranged, is the second winding zone (27b), in which the conductor sequence (51b-d) that follows the conductor sequence (51a-c) with regard to the current path is arranged.

10. Drive device according to Claim 5 or Claim 9, wherein
- one of the at least one sub-winding (35b) comprises a set (52a, 52b) of first to P-th conductor sequences of the second type (53a-d) that follow one another in the sequence of their designation with regard to the current path and are in each case arranged in two directly adjacent winding zones (27e, 27f) for the same phase (U, V, W), wherein
- each conductor sequence of the second type (53a-d) comprises first to (L/2)-th pairs (54d-f) of a first one of the internal portions (39c) and a second one of the internal portions (39d), and the pairs (54d-f) are designated according to their sequence along the current path, wherein
- the first and second internal portions (39c, 39d) are disposed in different layers (32a-f) of the double layer (33a-c) corresponding to the designation of the pair, wherein
- the first to (P-1)-th conductor sequences of the second type (53a-c) are connected by way of one of the connection portions (41) to the conductor sequence of the second type (53b-d) that follows along the current path, and the following conductor sequence of the second type (53b-d) is arranged in two directly adjacent winding zones (27) for the same phase (U, V, W).

11. Drive device according to Claims 9 and 10, wherein the sub-windings (35a, 35b) run around the stator core (20) in opposite circumferential directions.

12. Drive device according to one of Claims 9 to 11, wherein
- the first internal portion (39a, 39c) of the pairs (54a-f) of the conductor sequences (51a-d, 53a-d) of the or of a respective sub-winding (35a, 35b) is arranged in one of the layers (32a-f) of the double layer (33a-c), and the second internal portion (39b, 39d) of the pairs (54a-f) of the conductor sequences (51a-d, 53a-d) of the or of a respective sub-winding (35a, 35b) is arranged in the other one of the layers (33a-c) of the double layer (33a-c), or
- the first internal portion (39a, 39c) of the pairs (54a, 54c, 54d, 54f) with an odd-numbered designation of the conductor sequences (51a-d, 53a-d) of the or of a respective sub-winding (35a, 35b) is arranged in one of the layers (32a-f) of the double layer (33a-c), the second internal portion (39b, 39d) of the pairs (54a, 54c, 54d, 54f) with an odd-numbered designation of the conductor sequences (51a-d, 53a-d) of the or of a respective sub-winding (35a, 35b) is arranged in the other layer (32a-f) of the double layers (33a-c), the first internal portion (39a, 39c) of the pairs (54b, 54e) with an even-numbered designation of the conductor sequences (51a-d, 53a-d) of the or of a respective sub-winding (35a, 35b) is arranged in the other layer (32a-f) of the double layer (33a-c), and the second internal portion (39b, 39d) of the pairs (54b, 54e) with an even-numbered designation of the conductor sequences (51a-d, 53a-d) of the or of a respective sub-winding (35a, 35b) is arranged in the one layer (32a-f) of the double layer (33a-c).

13. Drive device according to one of Claims 9 to 12, wherein
- the or a respective sub-winding comprises a total of q sets (50a-c, 52a-c) of the conductor sequences (51a-d, 53a-d) which are in each case arranged in the same sub-winding zone (31a, 31b), wherein
- each set (50b, 50c, 52b, 52c) that directly follows another set (50a, 50b, 52a, 52b) of the same sub-winding (35a, 35b) with regard to the current path is arranged in a different sub-winding zone (31a, 31b) than the other set (50a, 50b, 52a, 52b).

14. Vehicle (1), comprising a drive device (2) according to one of the preceding claims, which is configured to drive the vehicle (1).

## Revendications

1. Dispositif d'entraînement (2) pour un véhicule électrique (1), comprenant :
- un stator (3) qui est conçu pour générer un champ magnétique tournant et qui comprend :
- un noyau de stator (20) qui s'étend le long d'un axe longitudinal (21) et dans lequel sont formées une pluralité d'encoches (22) agencées dans la direction circonférentielle, et
- un enroulement statorique (26) qui occupe plusieurs zones d'enroulement (27) dans les encoches (22), chaque zone d'enroulement (27) étant subdivisée en un premier côté (29) et en un deuxième côté (30) dans un plan de section transversale perpendiculaire à l'axe longitudinal (21) par une division radiale centrale (28) ; dans lequel
- l'enroulement statorique (26) présente un nombre N de phases (U, V, W) et un nombre 2·P de pôles, et le nombre d'encoches (22) est de 2·P·N·q, où q ≥ 2, et chaque zone d'enroulement (27) s'étend sur au moins q+1 des encoches (22), où P, N et q sont des nombres naturels, dans lequel
- chaque zone d'enroulement (27) est divisée radialement en des première à L-ième couches (32a-f), désignées selon leur ordre dans la direction radiale, les couches (32a-f) formant des première à (L/2)-ième doubles couches (33a-c), la i-ième double couche (33a-c) comprenant la (2i-1)-ième couche et la (2i)-ième couche (32a-f) pour tous les 1 ≤ i ≤ (L/2), où L ≥ 6 et est pair, et où L et i sont des nombres naturels, et
- un dispositif de conversion (4) pour convertir l'énergie magnétique du champ tournant en un mouvement rotatif de sortie (5) du dispositif d'entraînement (2), dans lequel le dispositif de conversion (4)
- comprend un rotor (6) qui, avec le stator (3), forme une machine électrique tournante (7), de sorte que le rotor (6) peut être entraîné dans un mouvement de rotation du rotor (8) qui, en fonction du champ tournant, comprend sélectivement l'un de deux sens de rotation opposés, et
- comprend une section de transmission (9) qui est conçue pour transformer le mouvement de rotation du rotor (8) en le mouvement de rotation de sortie (5), **caractérisé en ce que**
le dispositif de conversion (4) présente l'un des deux sens de rotation du mouvement de rotation du rotor (8) en tant que sens de rotation préférentiel (10), le deuxième côté (30) suivant le premier côté (29) dans le sens de rotation préférentiel (10) et chaque zone d'enroulement (27) occupant sur le premier côté (29) une surface de section transversale des encoches (22) plus petite que sur le deuxième côté (30).

2. Dispositif d'entraînement selon la revendication 1, dans lequel
- un rendement de la section de transmission (9) est plus élevé dans le sens de rotation préférentiel (10) que dans l'autre des sens de rotation et/ou
- la section de transmission (9) comprend un système d'engrenages (11) présentant une configuration asymétrique déterminant le sens de rotation préférentiel (10) et/ou
- le dispositif d'entraînement (2) comprend un dispositif de commande (13) destiné à la section de transmission (9), qui possède un nombre de modes de fonctionnement sélectionnables plus élevé pour le sens de rotation préférentiel (10) que pour l'autre des sens de rotation et/ou
- le dispositif d'entraînement (2) comprend un dispositif de ventilation (14) qui présente une efficacité de refroidissement plus élevée pour le sens de rotation préférentiel (10) que pour l'autre des sens de rotation.

3. Dispositif d'entraînement selon la revendication 1 ou 2, dans lequel
l'enroulement statorique (26) est réalisé sous la forme d'un enroulement à fil rond ou d'un enroulement à conducteur profilé.

4. Dispositif d'entraînement selon l'une quelconque des revendications précédentes, dans lequel un nombre de doubles couches (33a-c), qui est inférieur au nombre des autres doubles couches (33a-c), est décalé d'au moins une encoche (22) par rapport aux doubles couches (33a-c) restantes dans le sens opposé au sens de rotation préférentiel (10).

5. Dispositif d'entraînement selon l'une quelconque des revendications précédentes, dans lequel
- chaque zone d'enroulement (27) est subdivisée dans la direction circonférentielle en des première à q-ième zones d'enroulement partielles (31a, 31b), qui comprennent respectivement toutes les couches (32a-f) et sont désignées selon leur ordre dans la direction circonférentielle, dans lequel
- l'enroulement statorique (26) comprend, pour une phase respectif (U, V, W), un enroulement de phase (34u, 34v, 34w), dans lequel
- l'enroulement de phase (34u, 34v, 34w) comprend au moins un enroulement partiel (35a, 35b) formant un trajet de courant, qui comprend des parties internes (39, 39ad) agencées à l'intérieur des encoches (22) et des parties de connexion (40, 41) agencées sur des faces frontales (24, 25) du noyau de stator (20), qui connectent respectivement de manière électriquement conductrice deux parties internes (39, 39a-d) se suivant directement par rapport au trajet de courant.

6. Dispositif d'entraînement selon la revendication 5, dans lequel
- l'enroulement partiel (35a) comprend plusieurs séquences de conducteurs (36a-f) de parties internes (39) successives par rapport au trajet de courant, dans lequel
- chaque séquence de conducteurs (36a-f) est agencée dans l'une des doubles couches (33a-c) et forme un tour complet autour du noyau de stator (20), dans lequel
- des première à L/2-ième des séquences de conducteurs (36a-c) s'étendent respectivement dans une direction circonférentielle, en particulier dans le sens de rotation préférentiel (10), dans lequel
- des [(L/2)+1]-ième à L-ième des séquences de conducteurs (36d-f) s'étendent respectivement le long d'une autre direction circonférentielle, qui est opposée à la direction circonférentielle.

7. Dispositif d'entraînement selon la revendication 6, dans lequel
chaque séquence de conducteurs (36b-f), qui suit immédiatement une autre séquence de conducteurs (36a-e) par rapport au trajet de courant, est agencée dans une zone d'enroulement partiel (31a, 31b) différente de l'autre séquence de conducteurs (36a-e).

8. Dispositif d'entraînement selon la revendication 6 ou 7, dans lequel
- il est prévu un autre enroulement partiel (35b) qui correspond à l'enroulement partiel (35a), dans lequel
- une partie interne respective (39) de l'autre enroulement partiel (35b), qui est située à la même position (32a-f) de la même zone d'enroulement (27) qu'une partie interne (39) de l'enroulement partiel (35a), est agencée dans une autre zone d'enroulement partiel (31a, 31b) que la zone d'enroulement partiel (31a, 31b) dans laquelle se trouve la partie interne (39) de l'enroulement partiel (35a).

9. Dispositif d'entraînement selon la revendication 5, dans lequel
- l'un dudit au moins un enroulement partiel (35a) comprend un ensemble (50a, 50b) de première à P-ième séquences de conducteurs d'un premier type (51a-d) qui se suivent dans l'ordre de leur désignation par rapport au trajet de courant et qui sont respectivement agencées dans des première à quatrième zones d'enroulement immédiatement adjacentes (27a-d) pour la même phase (U, V, W), dans lequel
- chaque séquence de conducteurs du premier type (51ad) comprend des première à (L/2)-ième paires (54a-c) d'une première des parties internes (39a), et d'une deuxième des parties internes (39b), et les paires (54a-c) sont désignées selon leur ordre le long du trajet de courant, dans lequel
- les première et deuxième parties internes (39a, 39b) sont agencées à des positions différentes (32a-f) de la même double couche (33a-c), dans lequel
- la première paire (54a) est agencée dans la première double couche (33a), dans lequel
- la deuxième paire (54b) est agencée dans la (L/2)-ième double couche (33c), dans lequel
- la troisième paire (54c) est agencée dans la deuxième double couche (33b) ou les troisième à (L/2)-ième paires (54c) sont agencées dans les deuxième à [(L/2)-1]-ième doubles couches (33b), dans lequel
- la troisième zone d'enroulement (27c) dans laquelle sont agencées les parties internes des première à (P-1)-ième séquences de conducteurs (51a-c) est la première zone d'enroulement (27a) dans laquelle est agencée la séquence de conducteurs (51b-d) qui suit la séquence de conducteurs (51a-c) par rapport au trajet de courant, dans lequel
- la quatrième zone d'enroulement (27d) dans laquelle sont agencées les parties internes (39) des première à (P-1)-ième séquences de conducteurs (51a-c) est la deuxième zone d'enroulement (27b) dans laquelle est agencée la séquence de conducteurs (51b-d) qui suit la séquence de conducteurs (51a-c) par rapport au trajet de courant.

10. Dispositif d'entraînement selon la revendication 5 ou 9, dans lequel
- l'un dudit au moins un enroulement partiel (35b) comprend un ensemble (52a, 52b) de première à P-ième séquences de conducteurs d'un deuxième type (53a-d) qui se suivent dans l'ordre de leur désignation par rapport au trajet de courant et qui sont respectivement agencées dans deux zones d'enroulement immédiatement adjacentes (27e, 27f) pour la même phase (U, V, W), dans lequel
- chaque séquence de conducteurs du deuxième type (53a-d) comprend des première à (L/2)-ième paires (54d-f) d'une première des parties internes (39c) et d'une deuxième des parties internes (39d), et les paires (54d-f) sont désignées selon leur ordre le long du trajet de courant, dans lequel
- les première et deuxième parties internes (39c, 39d) sont agencées à des positions différentes (32a-f) de la double couche (33a-c) correspondant à la désignation de la paire, dans lequel
- les première à (P-1)-ième séquences de conducteurs du deuxième type (53a-c) sont reliées par l'une des parties de connexion (41) à la séquence de conducteurs du deuxième type (53b-d) qui suit le long du trajet de courant, et la séquence de conducteurs du deuxième type (53b-d) qui suit est agencée dans deux zones d'enroulement (27) immédiatement adjacentes pour la même phase (U, V, W).

11. Dispositif d'entraînement selon les revendications 9 et 10, dans lequel
les enroulements partiels (35a, 35b) s'étendent dans des directions circonférentielles opposées autour du noyau de stator (20).

12. Dispositif d'entraînement selon l'une quelconque des revendications 9 à 11, dans lequel
- la première partie interne (39a, 39c) des paires (54a-f) des séquences de conducteurs (51a-d, 53a-d) dudit ou d'un enroulement partiel (35a, 35b) respectif est agencée dans l'une des couches (32a-f) de la double couche (33a-c) et la deuxième partie interne (39b, 39d) des paires (54a-f) des séquences de conducteurs (51a-d, 53a-d) dudit ou d'un enroulement partiel (35a, 35b) respectif est agencée dans l'autre des couches (33a-c) de la double couche (33a-c) ou
- la première partie interne (39a, 39c) des paires désignées par un nombre impair (54a, 54c, 54d, 54f) des séquences de conducteurs (51a-d, 53a-d) dudit ou d'un enroulement partiel (35a, 35b) respectif dans l'une des couches (32a-f) de la double couche (33a-c), la deuxième partie interne (39b, 39d) des paires désignées par un nombre impair (54a, 54c, 54d, 54f) des séquences de conducteurs (51a-d, 53a-d) dudit ou d'un enroulement partiel (35a, 35b) respectif dans l'autre couche (32a-f) de la double couche (33a-c), la première partie interne (39a, 39c) des paires désignées par un nombre pair (54b, 54e) des séquences de conducteurs (51a-d, 53a-d) dudit ou d'un enroulement partiel (35a, 35b) respectif à l'autre position (32a-f) de la double couche (33a-c) et la deuxième partie interne (39b, 39d) des paires désignées par un nombre pair (54b, 54e) des séquences de conducteurs (51a-d, 53a-d) dudit ou d'un enroulement partiel (35a, 35b) respectif sont agencées dans l'une des couches (32a-f) de la double couche (33a-c).

13. Dispositif d'entraînement selon l'une quelconque des revendications 9 à 12, dans lequel
- ledit ou un enroulement partiel respectif comprend au total q ensembles (50a-c, 52a-c) des séquences de conducteurs (51a-d, 53a-d), qui sont respectivement agencées dans la même zone d'enroulement partiel (31a, 31b), dans lequel
- chaque ensemble (50b, 50c, 52b, 52c) qui suit immédiatement un autre ensemble (50a, 50b, 52a, 52b) du même enroulement partiel (35a, 35b) par rapport au trajet de courant est agencé dans une zone d'enroulement partiel (31a, 31b) différente de l'autre ensemble (50a, 50b, 52a, 52b).

14. Véhicule (1) comprenant un dispositif d'entraînement (2) selon l'une quelconque des revendications précédentes, qui est conçu pour entraîner le véhicule (1).
